(19)

Europäisches
Patentamt
European
Patent Office
Office européen
des brevets

(11) **EP 4 447 522 A1**

(12) **EUROPEAN PATENT APPLICATION**
published in accordance with Art. 153(4) EPC

(43) Date of publication:
**16.10.2024 Bulletin 2024/42**

(21) Application number: **22903349.3**

(22) Date of filing: **05.12.2022**

(51) International Patent Classification (IPC):
***H04W 24/02*** (2009.01)

(52) Cooperative Patent Classification (CPC):
**G06F 18/21; G06F 18/214; G06N 3/044;
G06N 3/0442; G06N 3/0464; G06N 3/048;
G06N 3/0499; G06N 3/08; G06N 3/10; H04W 24/02**

(86) International application number:
**PCT/CN2022/136436**

(87) International publication number:
**WO 2023/103927 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2021  CN 202111512458**

(71) Applicant: **ZTE Corporation
Shenzhen, Guangdong  518057 (CN)**

(72) Inventors:
• **HE, Haigang
Shenzhen, Guangdong 518057 (CN)**
• **LU, Youxiong
Shenzhen, Guangdong 518057 (CN)**
• **XING, Weimin
Shenzhen, Guangdong 518057 (CN)**
• **BI, Feng
Shenzhen, Guangdong 518057 (CN)**

(74) Representative: **Regimbeau
20, rue de Chazelles
75847 Paris Cedex 17 (FR)**

(54) **INFORMATION TRANSMISSION METHOD, COMMUNICATION NODE, AND STORAGE MEDIUM**

(57)     Provided are an information sending method, a communication node, and a storage medium. The information sending method includes generating a parameter of a neural network; and sending first information, where the first information includes the parameter of the neural network.

| Generate a parameter of a neural network | 110 |

| Send first information, where the first information includes the parameter of the neural network | 120 |

**FIG. 1**

## Description

### TECHNICAL FIELD

The present application relates to the field of wireless communication network technology, for example, an information sending method, a communication node, and a storage medium.

### BACKGROUND

A neural network can implement a particular function such as prediction or identification. Before a neural network is used, the neural network needs to be trained. To ensure the performance of the neural network, a large number of training datasets need to be used in the training process. Otherwise, the training is insufficient, resulting in improper parameters of the neural network and a low accuracy rate of prediction or identification. Before using a function of a neural network, a client needs to locally construct the neural network and train the neural network by using a large number of training datasets to continuously optimize parameters of the neural network. This process requires a relatively high capability of a client device and consumes too much time.

### SUMMARY

The present application provides an information sending method, a communication node, and a storage medium.

An embodiment of the present application provides an information sending method, which includes generating a parameter of a neural network; and sending first information, where the first information includes the parameter of the neural network.

An embodiment of the present application provides an information sending method, which includes generating second information, where the second information is used for a first communication node to perform neural network computing; and sending the second information.

An embodiment of the present application provides a communication node which includes a memory, a processor, and a computer program stored in the memory and executable by the processor, where the processor executes the computer program to perform the preceding information sending method.

An embodiment of the present application provides a computer-readable storage medium in which a computer program is stored, and the computer program, when executed by a processor, causes the processor to perform the preceding information sending method.

### BRIEF DESCRIPTION OF DRAWINGS

FIG. 1 is a flowchart of an information sending method according to an embodiment.

FIG. 2 is another flowchart of an information sending method according to an embodiment.

FIG. 3 is a schematic diagram of a neural network according to an embodiment.

FIG. 4 is a schematic diagram of neural network computing distributed in different nodes according to an embodiment.

FIG. 5 is another schematic diagram of neural network computing distributed in different nodes according to an embodiment.

FIG. 6 is another schematic diagram of neural network computing distributed in different nodes according to an embodiment.

FIG. 7 is another schematic diagram of neural network computing distributed in different nodes according to an embodiment.

FIG. 8 is another schematic diagram of neural network computing distributed in different nodes according to an embodiment.

FIG. 9 is another schematic diagram of neural network computing distributed in different nodes according to an embodiment.

FIG. 10 is another schematic diagram of neural network computing distributed in different nodes according to an embodiment.

FIG. 11 is another schematic diagram of neural network computing distributed in different nodes according to an embodiment.

FIG. 12 is another schematic diagram of neural network computing distributed in different nodes according to an embodiment.

FIG. 13 is another schematic diagram of neural network computing distributed in different nodes according to an embodiment.

FIG. 14 is another schematic diagram of neural network computing distributed in different nodes according to an embodiment.

FIG. 15 is another schematic diagram of neural network computing distributed in different nodes according to an embodiment.

FIG. 16 is another schematic diagram of neural network computing distributed in different nodes according to an embodiment.

FIG. 17 is a schematic diagram of the distribution of antenna elements in an antenna panel according to an embodiment.

FIG. 18 is a schematic diagram of a mapping relationship between transceiver units (TXRUs) and antenna elements according to an embodiment.

FIG. 19 is a schematic diagram of a virtualization model of TXRUs according to an embodiment.

FIG. 20 is a schematic diagram of the spatial distribution of antenna panels according to an embodiment.

FIG. 21 is a structural diagram of an information sending apparatus according to an embodiment.

FIG. 22 is another structural diagram of an information sending apparatus according to an embodiment.

FIG. 23 is a hardware structural diagram of a communication node according to an embodiment.

DETAILED DESCRIPTION

The present application is described hereinafter in conjunction with the drawings and embodiments. The embodiments described herein are intended to explain the present application. For ease of description, the drawings illustrate only part related to the present application.

In embodiments of the present application, a neural network may implement a target function such as prediction or identification. Neural network computing includes training of the neural network, testing of the neural network, and applying of the neural network, where the testing of the neural network is optional. Generally, the training of the neural network, the testing of the neural network (optional), and the applying of the neural network are all performed by the same entity, for example, a user equipment (UE). In this case, a relatively high capability of the UE is required. However, a UE side generally has no dataset for training the neural network. Before training the neural network, the UE side requires a network side to send a large number of training datasets to the UE side. The training datasets are generally on a large scale, causing too many communication time-frequency resource overheads. Moreover, the target function of the UE is implemented with a relatively large delay. In another example, the training of the neural network, the testing of the neural network (optional), and the applying of the neural network are all performed by the network side. In this case, the UE needs to acquire output data corresponding to the target function from the network side, causing a relatively large delay of the target function.

As for the above cases, the embodiments of the present application provide a distributed framework of neural network functions, that is, part of the neural network computing is performed by the network side and part of the neural network computing is performed by the UE side, and solutions are provided for the distribution of the neural network computing at the network side and the UE side and an information exchange process between the network side and the UE side to fully reduce the implementation delay of the target function, reduce time-frequency resource overheads, and improve the efficiency of the neural network computing.

An embodiment provides an information sending method which may be applied by a first communication node. The first communication node mainly refers to a network-side node such as a base station or a positioning server. The positioning server is a node with a positioning management function and includes a location management function (LMF), an Enhanced Serving Mobile Location Centre (E-SMLC), and a Secure User Plane Location (SUPL) Location Platform (SLP), which are not limited thereto.

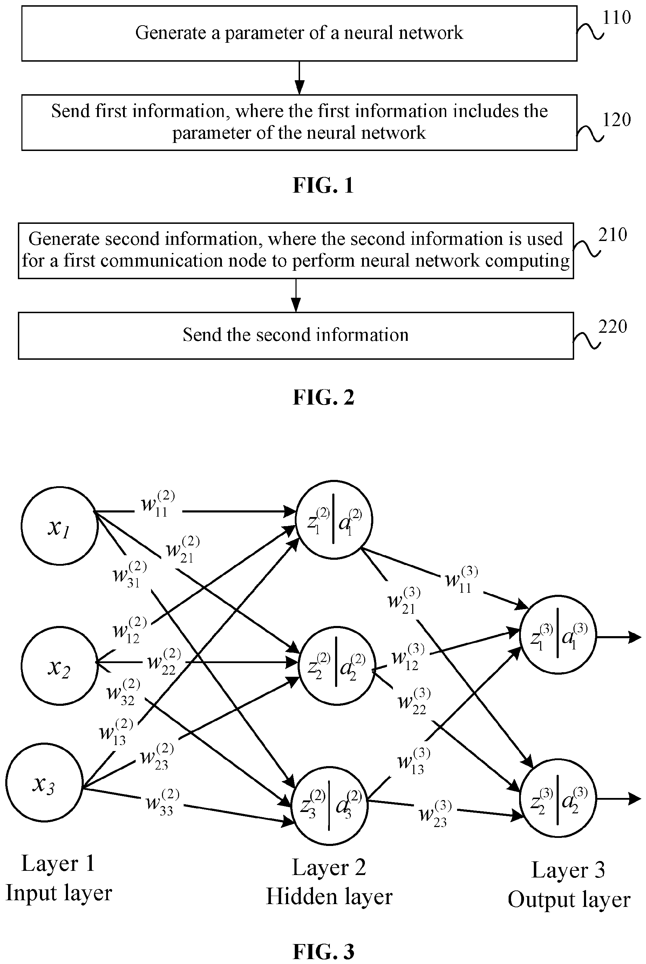

FIG. 1 is a flowchart of an information sending method according to an embodiment. As shown in FIG. 1, the information sending method according to the embodiment includes 110 and 120.

In 110, a parameter of a neural network is generated.

In 120, first information is sent, where the first information includes the parameter of the neural network.

In the embodiment, the parameter of the neural network may be applied to the training of the neural network. For example, when training the neural network, the first communication node needs to use some parameters of the neural network, including the number of layers of the neural network and the number of neurons. The first communication node may construct a neural network model based on the parameter of the neural network, train the neural network, obtain weights and biases of the neural network through the training, and send the weights and biases, two parameters of the neural network, to a second communication node through the first information. The first communication node may also send other parameters of the neural network excluding the weights and biases and to be used to the second communication node through the first information so that the second communication node trains the neural network.

The parameter of the neural network may also be applied to the applying of the neural network. For example, the first communication node may send the parameter of the neural network obtained by the first communication node to the second communication node. The parameter of the neural network includes, but is not limited to, a type of the neural network, a depth (that is, the number of layers) of the neural network, the number of neurons in each of one or more layers of the neural network, a type of input data of the neural network, and/or a use of the neural network. The second communication node applies the neural network based on the parameter of the neural network to obtain a prediction or estimation result of expected output.

In an embodiment, the parameter of the neural network may be used for the first communication node to train and test (optionally) the neural network and may be used for the second communication node to apply the neural network.

In an embodiment, the second communication node may train and/or test the neural network based on the received parameter of the neural network. The parameter of the neural network is on a small scale and is not as large as data in a training set, a verification set, or a test set. Therefore, the sending of the parameter of the neural network does not cause excessive time-frequency resource overheads.

In the embodiment, the first information is sent and thus the parameter of the neural network is exchanged so that neural network computing can be flexibly distributed at a network side and a UE side. For example, the neural network may be trained and tested (optionally) by the first communication node at the network side, and the neural network may be applied by the second communication node at the UE side. After training the neural network, the first communication node may send the parameter of the neural network, such as weights and biases of neurons in the neural network, to the second communication node through the first information. The second communication node applies the neural network based on the parameter of the neural network to obtain output data of the neural network.

In the information sending method of the embodiment, the first communication node generates the parameter of the neural network and sends the parameter to the second communication node so that the network side helps the UE side to determine the parameter of the neural network, thereby reducing a processing burden of the UE side.

In an embodiment, the information sending method further includes at least one of the operations below.

The first communication node trains the neural network using the parameter of the neural network; and the first communication node tests the neural network using the parameter of the neural network.

In an embodiment, the parameter of the neural network is used for the second communication node to perform at least one of the operations below.

The neural network is trained. The neural network is tested. The neural network is applied.

In an embodiment, training the neural network includes inputting sample data into the neural network, and adjusting the parameter of the neural network to enable output of the neural network to match with label data corresponding to the sample data; testing the neural network includes inputting test data into the neural network, and determining a performance index of the neural network according to a degree of match between the output of the neural network and label data corresponding to the test data; and applying the neural network includes inputting actual input data into the neural network to obtain actual output data of the neural network.

In an embodiment, in the training of the neural network, sufficient sample data are input into the neural network, and a structure of the neural network is adjusted (the weights and biases of the neurons are mainly adjusted) by using a certain algorithm so that the output of the neural network matches with the corresponding label data (expected output). In this manner, the structure of the neural network can be determined (the weights and biases are mainly determined). The sample data and label data for adjusting the structure of the neural network are referred to as the training set, training data, or training samples. Optionally, in the training of the neural network, the trained neural network may be verified. Multiple neural networks may be constructed through the training, then the multiple neural networks may be verified using some sample data, and a neural network with best performance is selected through verification as the final neural network. The sample data for selecting the neural network are referred to as the verification set, verification data, or verification samples. The sample data included in the training set and the sample data included in the verification set are all known data, and the training set and the verification set each include input sample data and output sample data, where the output sample data are also referred to as the label data.

In the testing of the neural network, the performance of the selected neural network is tested through the test set. The test set includes multiple known sample data (also referred to as the test data), and each sample datum includes input sample data and output sample data. In the testing of the neural network, sufficient input test data in the test set are input into the neural network, and whether the output of the neural network matches with the corresponding output sample data (also referred to as the label data) or the degree of match is determined, so as to determine the performance index of the neural network (for example, an accuracy rate of prediction or identification).

The applying of the neural network corresponds to an actual applying of the neural network, and the actual input data are input into the neural network to obtain the actual output data, thereby implementing a target function. In the applying of the neural network, input data (that is, the actual input data) are known, and output data (that is, the actual output data) are unknown.

In an embodiment, the parameter of the neural network includes the weights and biases corresponding to the neurons in the neural network.

In an embodiment, the parameter of the neural network includes the type of the neural network; and the type of the neural network includes at least one of a fully connected neural network, a convolutional neural network (CNN), a recurrent neural network (RNN), or a long short-term memory (LSTM) neural network.

In an embodiment, the parameter of the neural network includes the depth of the neural network.

In an embodiment, the parameter of the neural network includes the number of neurons included in each of the one or more layers of the neural network.

In an embodiment, the parameter of the neural network includes at least one of a type of input data of the neural network or a type of output data of the neural network.

In an embodiment, the parameter of the neural network includes a function of the neural network; and the function of the neural network includes at least one of positioning, beam management, channel state information (CSI) prediction, mobility management, time domain resource prediction, frequency domain resource prediction, channel estimation, or line-of-sight/non-line-of-sight (LOS/NLOS) channel identification.

In an embodiment, before the parameter of the neural network is generated, the following is further included: second information reported by the second communication node is received, where the neural network is trained according to the second information.

In the embodiment, in a process of determining the parameter of the neural network, the first communication node may consider a capability of the second communication node with reference to the second information reported by the second communication node. The second communication node may feed back or report a value range of the parameter of the neural network supported by the second communication node to the first communication node, where the value range includes, but is not limited to, a maximum number of input data, a maximum number of output data, a supported maximum number of layers of the neural network, a supported maximum number of neurons of the neural network, and a supported type of the neural network. The second communication node may also feed back or report a supported type of input data and type of output data and a use or function of the neural network to the first communication node. The use or function of the neural network includes, but is not limited to, the positioning, the beam management (beam acquisition and/or beam prediction), the CSI prediction, the mobility management, the time domain and/or frequency domain resource prediction, the channel estimation, and the LOS/NLOS channel identification. For different uses or functions, the second communication node may report different information to the first communication node. For example, the target function is the beam management, and the second communication node may report a supported virtualization model of TXRUs and mapping relationship between TXRUs and antenna elements to a network node.

In an embodiment, the information sending method further includes selecting at least one of a training set, a test set or a verification set according to the second information.

FIG. 2 is another flowchart of an information sending method according to an embodiment. The information sending method of the embodiment may be applied by a second communication node. The second communication node mainly refers to a user-side node such as a UE. As shown in FIG. 2, the information sending method according to the embodiment includes 210 and 220.

In 210, second information is generated, where the second information is used for a first communication node to perform neural network computing.

In 220, the second information is sent.

In the embodiment, the second communication node may send the second information to the first communication node so that the first communication node performs the neural network computing, for example, the first communication node determines a parameter of a neural network and trains and tests (optionally) the neural network.

The second information may include a capability of the second communication node. Based on this, it can be ensured that the parameter of the neural network determined by the first communication node does not exceed the capability of the second communication node. The second communication node may send a value range of the parameter of the neural network supported by the second communication node to the first communication node, where the value range includes, but is not limited to, a maximum number of input data, a maximum number of output data, a supported maximum number of layers of the neural network, a supported maximum number of neurons of the neural network, and a supported type of the neural network. The second communication node may also feed back or report a supported type of input data and type of output data and a use or function of the neural network to the first communication node. The use or function of the neural network includes, but is not limited to, positioning, beam management (beam acquisition and/or beam prediction), CSI prediction, mobility management, time domain and/or frequency domain resource prediction, channel estimation, and LOS/NLOS channel identification. For different uses or functions, the second communication node may report different information to the first communication node. For example, a target function is the beam management, and the second communication node may report a supported virtualization model of TXRUs and mapping relationship between TXRUs and antenna elements to a network node.

In the information sending method of the embodiment, the second communication node used as the UE sends the second information to the first communication node used as the network node so that a UE side helps a network side to determine the parameter of the neural network, a neural network that meets the capability of the second communication node is more easily obtained, and the neural network computing can be flexibly distributed at the network side and the UE side, thereby reducing a processing burden of the UE side.

In an embodiment, the information sending method further includes the following.

First information is received, where the first information includes the parameter of the neural network; and a corresponding operation is performed on the neural network according to the first information.

In an embodiment, performing the neural network computing includes at least one of the following.

The neural network is trained according to the second information; the neural network is tested according to the second information; and the neural network is applied according to the second information.

In an embodiment, the second information includes the type of the neural network supported by the second communication node; and the type of the neural network includes at least one of a fully connected neural network, a CNN, an RNN, or an LSTM neural network.

In an embodiment, the second information includes at least one of: a maximum depth of the neural network supported by the second communication node, the maximum number of neurons of the neural network supported by the second communication node, or a maximum number of neurons included in each of one or more layers of the neural network supported by the second communication node.

In an embodiment, the second information includes the function of the neural network; and the function of the neural network includes at least one of the positioning, the beam management, the CSI prediction, the mobility management, the time domain resource prediction, the frequency domain resource prediction, the channel estimation, or the LOS/NLOS channel identification.

In an embodiment, the second information includes at least one of the type of input data of the neural network or the type of output data of the neural network.

In an embodiment, the second information includes a virtualization model of TXRUs of the second communication node; and the virtualization model of the TXRUs includes at least one of a subarray partition model or a fully connected model.

In an embodiment, the second information includes at least one of a mapping relationship between TXRUs of the second communication node and antenna elements of the second communication node, spatial distribution information of antenna panels of the second communication node, or a polarization manner of antenna elements of the second communication node.

In an embodiment, the second information includes at least one of a polarization angle of an antenna element of the second communication node or the height of an antenna of the second communication node.

In an embodiment, the second information includes the mapping relationship between the TXRUs of the second communication node and the antenna elements of the second communication node; and the mapping relationship includes at least one of the number of rows of antenna elements to which one TXRU is mapped, the number of columns of antenna elements to which one TXRU is mapped, a row spacing of antenna elements to which one TXRU is mapped, or a column spacing of antenna elements to which one TXRU is mapped.

In an embodiment, the second information includes the spatial distribution information of the antenna panels of the second communication node; and the spatial distribution information of the antenna panels includes at least one of the number of rows of the antenna panels, the number of columns of the antenna panels, a row spacing of the antenna panels, or a column spacing of the antenna panels.

In an embodiment, the second information includes the polarization manner of the antenna elements of the second communication node; and the polarization manner includes at least one of co-polarized antenna elements or cross-polarized antenna elements.

In an embodiment, the second information includes at least one of a gain of an antenna element in a maximum gain direction, an angle corresponding to a set antenna attenuation in a horizontal direction, an angle corresponding to a set antenna attenuation in a vertical direction, a radiation pattern of an antenna element, or an angle of a normal direction of an antenna panel.

In an embodiment, the radiation pattern includes at least one of a horizontal radiation pattern, a vertical radiation pattern, a spatial three-dimensional radiation pattern, or an omnidirectional antenna.

In an embodiment, the set antenna attenuation includes an attenuation relative to an antenna gain in a maximum antenna gain direction.

In the embodiment, the set antenna attenuation is 3 dB.

The preceding information sending methods and distributed scenarios of the neural network are exemplarily described below through different embodiments.

**Embodiment one**

FIG. 3 is a schematic diagram of a neural network according to an embodiment. As shown in FIG. 3, the neural network includes an input layer, a hidden layer, and an output layer. Each layer may include one or more neurons. The number of layers included in the neural network is also referred to as a depth of the neural network. The neural network may include one or more hidden layers. M neurons in the input layer correspond to M input data. N neurons in the output layer correspond to N output data. In FIG. 3, the depth (the number of layers) of the neural network is 3, the first layer is the input layer, the number of neurons in the input layer is 3, the second layer is the hidden layer, the number of neurons in the second layer is 3, the third layer is the output layer, and the number of neurons in the output layer is 2.

The input of each neuron in the hidden layer and the output layer may be connected to one or more neurons in the previous layer. The output of each neuron in the input layer and the hidden layer may be connected to an neuron in the next layer and used as the input of the neuron in the next layer.

Here, the following symbols are used for marking: $w_{jk}^{(l)}$ denotes a connection weight from the k-th neuron in the (*l*-1)-th layer of the neural network to the *j*-th neuron in the *l*-th layer of the neural network, for example, in FIG. 3, $w_{21}^{(2)}$ denotes a weight from the first neuron in the first layer to the second neuron in the second layer. Similarly, $b_{j}^{(l)}$ denotes a deviation (bias) of the *j*-th neuron in the *l*-th layer, $z_{j}^{(l)}$ denotes a linear result of the *j*-th neuron in the *l*-th layer, and $a_{j}^{(l)}$ denotes the output of the *j*-th neuron in the *l*-th layer. For the neuron in the hidden layer and the output layer, the following formulas are true:

$$z_{j}^{(l)} = \sum_{k} w_{jk}^{j} a_{k}^{(l-1)}$$

and

$$a_{j}^{(l)} = \sigma\left(z_{j}^{(l)} + b_{j}^{(l)}\right)$$

. For $a_{k}^{(l-1)}$, when *l*-1=1,

$$a_{k}^{(1)} = x_{k}^{(1)} = x_{k}$$

. That is to say, for the neuron in the input layer, the input and output of the neuron are the same. $\sigma(\cdot)$ denotes an activation function.

The neural network is trained to adjust weights and biases of the neurons. The adjusted weights and biases may reflect a relationship between input data and output data of the neural network. Therefore, in practical application, the input data are input into the neural network so that expected output data can be predicted/estimated.

The neural network implements a target function, which involves training of the neural network, testing of the neural network, and applying of the neural network. The testing of the neural network is optional.

In the training of the neural network, sufficient sample data are input into the neural network, and a structure of the neural network is adjusted (weights and biases are mainly adjusted) by using a certain algorithm so that the output of the neural network matches with label data (expected output). In this manner, the structure of the neural network is determined (the weights and biases are mainly adjusted). The preceding sample data and label data for adjusting the structure of the neural network (mainly adjusting the weights and biases) are referred to as a training set, training data, or training samples. Optionally, in the training of the neural network, the trained neural network may be verified. After multiple neural networks are constructed through the training by using a training set, the multiple neural networks may be verified using some sample data, and a neural network with best performance is selected through verification as the final neural network model. Here, the sample data for selecting the neural network model are referred to as a verification set, verification data, or verification samples. The sample data included in the training set and the sample data included in the verification set are all known data. The training set and the verification set each include input sample data and output sample data. The output sample data in the training set or the verification set are also referred to as the label data.

In the testing of the neural network, the performance of the selected neural network is tested through a test set. The test set includes multiple known sample data, and each sample datum includes input sample data (test data) and output sample data (label data). In the testing of the neural network, sufficient test data are input into the neural network, and whether the output of the neural network matches with label data in the test set (or a degree of match) is determined, so as to determine a performance index of the neural network (for example, an accuracy rate).

The applying of the neural network corresponds to an actual applying of the neural network. In the applying of the neural network, input data are known and actual output data are unknown. In the applying of the neural network, actual input data are input into the neural network to obtain the actual output data of the neural network. The actual output data here are the prediction/estimation of expected data in practical application. Before the applying of the neural network, the neural network model has been determined in the training of the neural network and the testing of the neural network. In the applying of the neural network, actual data are input into the determined neural network to obtain output data, and the output data are used as the prediction/estimation of the expected data in practical application.

## Embodiment two

In the embodiment, for a target function, a neural network may be trained and applied by different communication nodes.

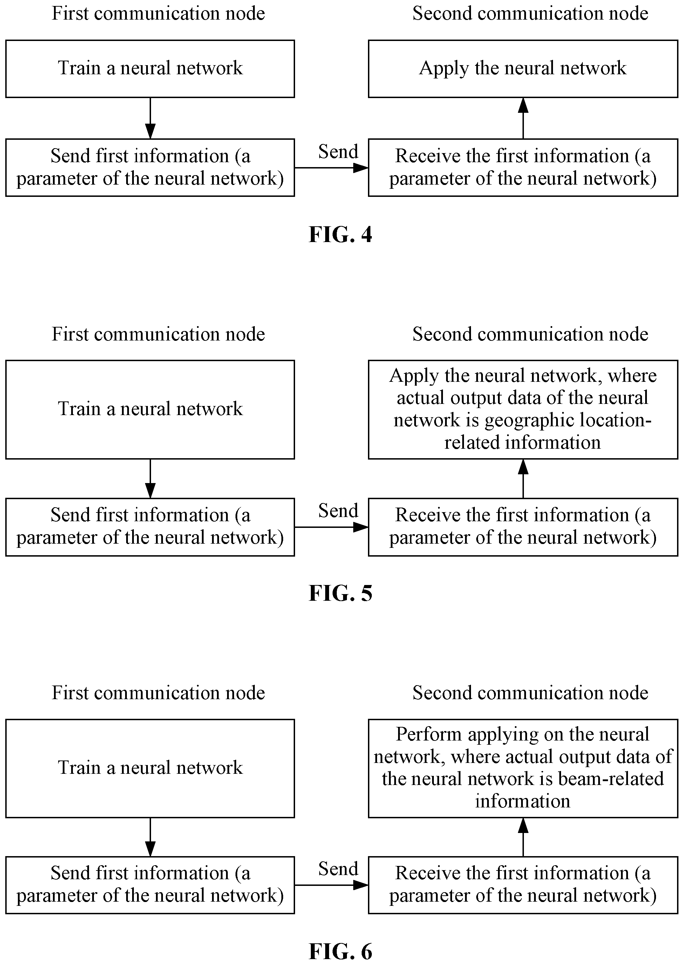

FIG. 4 is a schematic diagram of neural network computing distributed in different nodes according to an embodiment. As shown in FIG. 4, a first communication node trains the neural network to obtain a parameter of the neural network and sends the parameter of the neural network to a second communication node through first information, and the second communication node applies the neural network according to the received parameter of the neural network.

In the embodiment, the target function is implemented through the neural network. The embodiment provides distributed neural network functions, where the target function may be a function of positioning the second communication node, and the second communication node is a to-be-positioned node.

The target function is implemented through the neural network by training of the neural network, testing of the neural network, and applying of the neural network. The testing of the neural network is optional.

The first communication node and the second communication node implement different phases (functions) of neural network computing so that the positioning function can be implemented through the neural network. The first communication node implements the phase (function) of training of the neural network. In case that the phase (function) of testing of the neural network is required, the first communication node may also implement the phase (function) of the testing of the neural network. The second communication node implements the phase (function) of the applying of the neural network.

In the neural network, a certain relationship exists between input data and output data. In the neural network, the relationship between input data and output data may be embodied by proper weights and biases.

When the neural network has the proper weights and biases, proper input data are input into the neural network so that the output data of the neural network may be obtained, where the output data are the prediction/estimation of expected output data of the target function.

In the training of the neural network, weights and biases of the neural network may be adjusted to the proper weights and biases by using some sample data in a training set.

In the testing of the neural network before the applying of the neural network, a performance index of the neural network is measured by using sample data in a test set.

In the applying of the neural network, input data are input into the neural network with the proper weights and biases so that the prediction/estimation of the expected output data of the target function may be obtained.

Referring to FIG. 4, in the embodiment, the first communication node trains the neural network and obtains the weights and biases of the neural network through the training of the neural network; the first communication node sends the first information including the weights and biases of the neural network obtained through the training of the neural network; the second communication node receives the weights and biases of the neural network sent by the first communication node; and the second communication node applies the neural network based on the received weights and biases of the neural network. In the applying of the neural network, the second communication node inputs actual input data into the neural network to obtain actual output data of the neural network, where the actual output data are the prediction/estimation of expected data of the target function.

**Embodiment three**

In the embodiment, a target function of a neural network is a positioning function, and a second communication node is a to-be-positioned node. For the target function, the neural network may be trained and applied by different communication nodes.

The positioning function is implemented through the neural network by training of the neural network, testing of the neural network, and applying of the neural network. The testing of the neural network is optional.

The first communication node and the second communication node implement different phases (functions) of neural network computing so that the positioning function is implemented through the neural network. The first communication node implements the phase (function) of training of the neural network. In case that the testing of the neural network is required, the first communication node also implements the phase (function) of testing of the neural network. The second communication node implements the phase (function) of applying of the neural network.

The first communication node performs training on the neural network. The first communication node trains the neural network by using a training set to obtain weights and biases of the neural network. The training set includes input sample data and output sample data (label data), where the input sample data and the label data are all known data. In the embodiment, the label data may be some recorded geographical locations, and the input sample data may be some measured data corresponding to the geographical locations, for example, reference signal received power (RSRP) measured for the geographical locations.

So far the first communication node has obtained the weights and biases of the neural network by training the neural network. The first communication node sends the preceding weights and biases of the neural network obtained through the training of the neural network.

The second communication node receives the weights and biases of the neural network sent by the first communication node.

FIG. 5 is another schematic diagram of neural network computing distributed in different nodes according to an embodiment. As shown in FIG. 5, the first communication node may send first information, such as the weights and biases of the neural network, to the second communication node, and the second communication node applies the neural network. In the applying of the neural network, the second communication node inputs input data into the neural network to obtain output data of the neural network. The output data here are target output required for the target function. For example, the output data are coordinates of a geographical location. The input data here are reference signal received power (RSRP) measured for a to-be-positioned location. Thus, the to-be-positioned geographical location is obtained by using the RSRP associated with the to-be-positioned geographical location as the input data.

## Embodiment four

In the embodiment, a target function of a neural network is beam management (such as beam acquisition). For the target function, the neural network may be trained and applied by different communication nodes.

A first communication node and a second communication node implement different phases (functions) of neural network computing so that the neural network implements the beam acquisition function.

FIG. 6 is another schematic diagram of neural network computing distributed in different nodes according to an embodiment. As shown in FIG. 6, the first communication node implements the phase (function) of training of the neural network. In case that testing of the neural network is required, the first communication node also implements the phase (function) of testing of the neural network. The second communication node implements the phase (function) of applying of the neural network.

The first communication node performs training on the neural network. The first communication node trains the neural network by using a training set to obtain weights and biases of the neural network. The training set includes input sample data and label data, where the input sample data and the label data are all known data. In the embodiment, the label data may be beam indexes, and the input sample data are, for example, geographical locations. Each beam index includes at least one of an index of a transmitting beam, an index of a receiving beam, or a joint index of a transmit and receiving beam pair.

The first communication node obtains the weights and biases of the neural network by training the neural network. The first communication node sends first information to notify the second communication node of the preceding weights and biases of the neural network obtained through the training of the neural network. The second communication node receives the weights and biases of the neural network sent by the first communication node. The second communication node applies the neural network based on the received weights and biases of the neural network. In the applying of the neural network, the second communication node inputs actual input data into the neural network to obtain actual output data of the neural network. The actual output data here are target output required for the target function. For example, the actual output data are a beam index. The actual input data are, for example, coordinates of a geographical location. Thus, the beam index associated with the coordinates of the geographical location is obtained.

## Embodiment five

In the embodiment, a target function is implemented through neural network computing, and the neural network computing includes training, testing, and applying of the neural network. The testing of the neural network is optional. In the embodiment, the training of the neural network, the testing of the neural network (optional), and the applying of the neural network may all be performed by a second communication node. Alternatively, at least one of the training of the neural network, the testing of the neural network, or the applying of the neural network is performed by the second communication node, and remaining function (phase) is implemented by a first communication node.

The first communication node sends first information to the second communication node, where the first information is used for at least one of the purposes below.

The first information is used for instructing the second communication node to train the neural network or used for the second communication node to train the neural network. The first information is used for instructing the second communication node to test the neural network or used for the second communication node to test the neural network. The first information is used for instructing the second communication node to apply the neural network or used for the second communication node to apply the neural network.

The first information may include structure-related information of the neural network, where the structure-related information of the neural network is a type of the neural network, and the type of the neural network includes at least one of a fully connected neural network, a CNN, an RNN, or an LSTM neural network.

The first information may include the structure-related information of the neural network, for example, at least one of a depth (that is, the number of layers) of the neural network or the number of neurons in each of one or more layers of the neural network.

The first information may also include a type of input data of the neural network, and the type of input data includes at least one of RSRP or a delay.

The first information may also include a use or function of the neural network, for example, at least one of positioning, beam management (beam acquisition/beam prediction), CSI prediction, mobility management, time domain and/or frequency domain resource prediction, channel estimation, or LOS/NLOS channel identification.

The second communication node receives the first information and determines a parameter of the neural network (that is, a structure of the neural network) through the first information. The second communication node applies the neural network based on the determined neural network. In the applying of the neural network, the second communication node inputs actual input data into the neural network to obtain actual output data of the neural network, where the actual output data represent the prediction/estimation of expected data corresponding to the target function in practical application.

Optionally, before applying the neural network, the second communication node may train and/or test the neural network based on the determined neural network.

## Embodiment six

In the embodiment, a second communication node may send second information (including some parameters of a neural network) to a first communication node so that the first communication node trains the neural network. Then, the first communication node may send first information to the second communication node, and the second communication node applies the neural network.

The neural network implements a target function, and neural network computing includes training of the neural network, testing of the neural network (optional), and applying of the neural network.

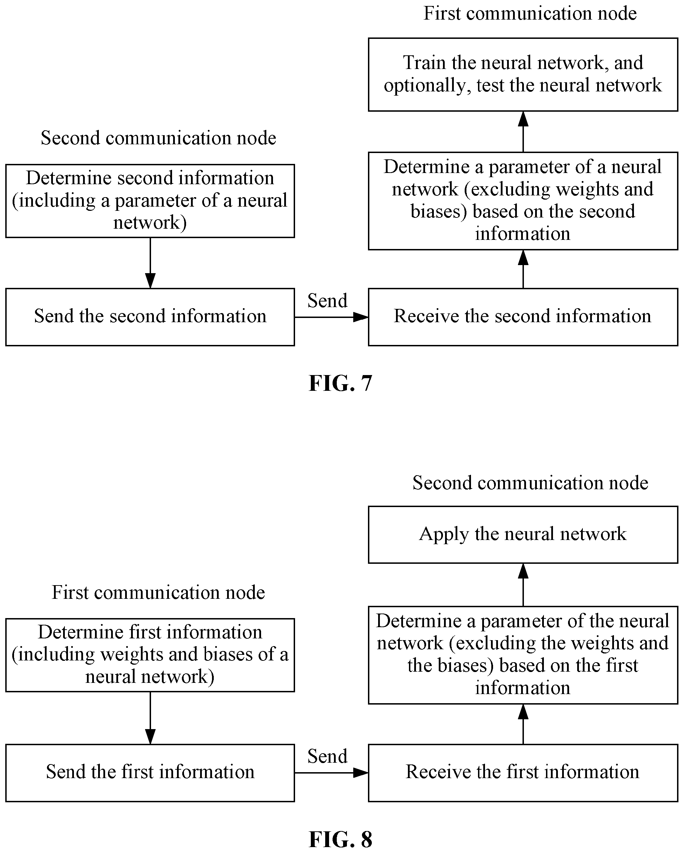

FIG. 7 is another schematic diagram of neural network computing distributed in different nodes according to an embodiment. As shown in FIG. 7, the second communication node sends the parameter of the neural network to the first communication node through the second information; and the first communication node receives the second information, determines the parameter of the neural network (excluding weights and biases) according to the second information, and trains and tests the neural network (optionally) by using the parameter of the neural network. After the training, the weights and biases may be determined.

The second communication node sends the second information to the first communication node, where the second information may include a type of the neural network, and the type of the neural network includes at least one of a fully connected neural network, a CNN, an RNN, or an LSTM neural network.

The second information may also include at least one of a depth (that is, the number of layers) of the neural network, the number of neurons in each of one or more layers of the neural network, a maximum depth (that is, a maximum number of layers) of the neural network supported by the second communication node, or a maximum number of neurons supported by the second communication node in each of one or more layers. The second information may also include a type of input data of the neural network, for example, RSRP and/or a delay.

The second information may also include a use of the neural network, for example, at least one of positioning, beam management (beam acquisition/beam prediction), CSI prediction, mobility management, time domain and/or frequency domain resource prediction, channel estimation, or LOS/NLOS channel identification.

The second information may also include a virtualization model of TXRUs of the second communication node, and the virtualization model of the TXRUs includes at least one of a subarray partition model or a fully connected model.

The second information may also include a mapping relationship between TXRUs and antenna elements (for example, the number of rows, the number of columns, a row spacing, and a column spacing of antenna elements to which one TXRU is mapped).

The second information may also include spatial distribution information of antenna panels of the second communication node (for example, the number of rows of the antenna panels, the number of columns of the antenna panels, a row spacing of the antenna panels, and a column spacing of the antenna panels).

The second information may also include a polarization manner of antenna elements of the second communication node.

The second information may also include a polarization angle of an antenna element of the second communication node.

The second information may also include the height of an antenna of the second communication node.

The first communication node receives the second information sent by the second communication node and may determine some parameters of the neural network (excluding the weights and biases of the neural network model, which are mainly obtained through training) based on the received second information, that is, determine the neural network model. The first communication node trains and tests (optionally) the neural network by using the determined neural network model (excluding the weights and biases of the neural network model). After the training, the first communication node may obtain the weights and biases of the neural network and notify the second communication node by sending the first information.

FIG. 8 is another schematic diagram of neural network computing distributed in different nodes according to an embodiment. As shown in FIG. 8, the first communication node sends the first information to the second communication node, where the first information includes the weights and biases of the neural network; and the second communication node receives the first information and determines the parameters of the neural network (that is, a structure of the neural network) through the first information. The second communication node applies the neural network based on the determined neural network. In the applying of the neural network, the second communication node inputs actual input data into the neural network to obtain actual output data, that is, output data corresponding to the target function in practical application.

## Embodiment seven

In the embodiment, a target function is implemented through neural network computing, and the neural network computing includes training, testing, and applying of a neural network. The testing of the neural network is optional.

A first communication node implements the phase (function) of training of the neural network and the phase (function) of testing (optional) of the neural network. A second communication node implements the phase (function) of applying of the neural network.

Alternatively, to implement the target function, the phase (function) of training of the neural network and the phase (function) of applying of the neural network are both implemented by the second communication node.

Alternatively, the second communication node implements the phase (function) of training, the phase (function) of testing, and the phase (function) of applying of the neural network.

The first communication node sends first information to the second communication node, where the first information is used for one of the purposes below.

The first information is used for instructing the second communication node to train the neural network or used for the second communication node to train the neural network. The first information is used for instructing the second communication node to apply the neural network or used for the second communication node to apply the neural network. The first information is used for instructing the second communication node to train and test the neural network or used for the second communication node to train and test the neural network. The first information is used for instructing the second communication node to train, test, and apply the neural network or used for the second communication node to train, test, and apply the neural network.

The first information includes structure-related information of the neural network, where the structure-related information of the neural network is a type of the neural network, and the type of the neural network includes at least one of a feed for ward neural network, a CNN, an RNN, an LSTM neural network, or a fully connected neural network.

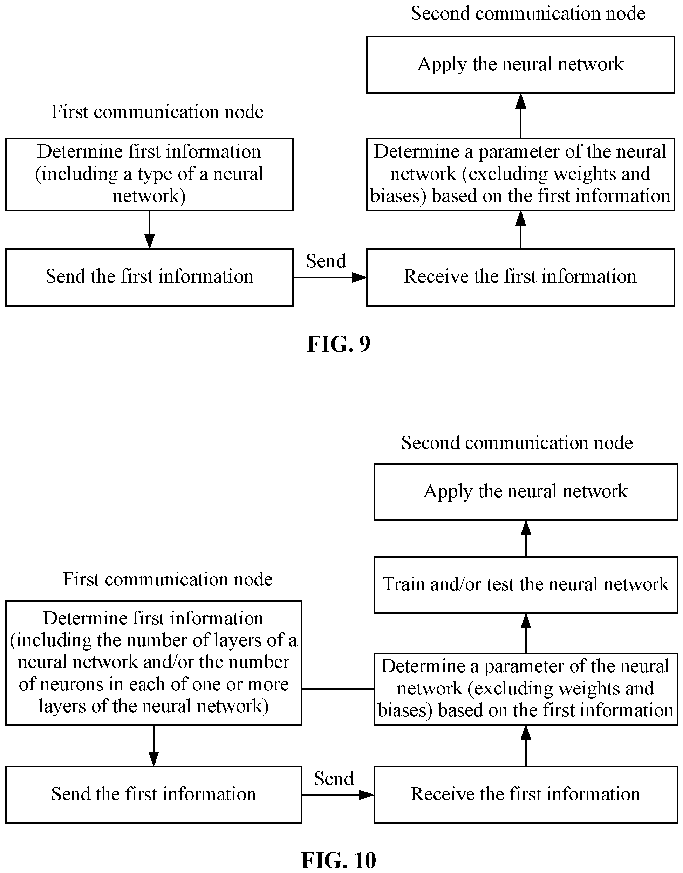

FIG. 9 is another schematic diagram of neural network computing distributed in different nodes according to an embodiment. As shown in FIG. 9, the first communication node sends the first information to the second communication node, where the first information includes the type of the neural network. The second communication node receives the first information and determines a parameter of the neural network (that is, a structure of the neural network) through the first information. The second communication node applies the neural network based on the determined neural network. In the applying of the neural network, the second communication node inputs actual input data into the neural network to obtain actual output data of the neural network, where the actual output data of the neural network represent output data corresponding to the target function in practical application.

**Embodiment eight**

In the embodiment, a target function is implemented through neural network computing, and the neural network computing includes a training, testing, and applying of a neural network. The testing of the neural network is optional.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

Alternatively, to implement the target function, the phase (function) of training of the neural network and the phase (function) of applying of the neural network are both implemented by the second communication node.

The first communication node sends first information to the second communication node, where the first information is used for one of the purposes below.

The first information is used for instructing the second communication node to train the neural network or used for the second communication node to train the neural network. The first information is used for instructing the second communication node to test the neural network or used for the second communication node to test the neural network. The first information is used for instructing the second communication node to apply the neural network or used for the second communication node to apply the neural network. The first information is used for instructing the second communication node to train and test the neural network or used for the second communication node to train and test the neural network. The first information is used for instructing the second communication node to train, test, and apply the neural network or used for the second communication node to train, test, and apply the neural network. The first information includes structure-related information of the neural network, where the structure-related information of the neural network includes at least one of a depth (that is, the number of layers) of the neural network or the number of neurons in each of one or more layers of the neural network.

For example, the first communication node indicates that the depth (that is, the number of layers) of the neural network is 3, and the first communication node indicates that the number of neurons in the second layer and the third layer of the neural network is 3 and 2, respectively. The number of neurons in an input layer (the first layer) of the neural network is 3 by default.

FIG. 10 is another schematic diagram of neural network computing distributed in different nodes according to an embodiment. As shown in FIG. 10, the second communication node receives the first information sent by the first communication node and determines a structure of the neural network according to the first information. The first information is used for the second communication node to apply the neural network, that is, the second communication node inputs actual input data into the determined neural network to obtain actual output data as expected output data of the target function.

Optionally, before the second communication node applies the neural network, the second communication node may train and test the neural network by using the structure of the neural network determined through the first information.

## Embodiment nine

In the embodiment, a target function is implemented through neural network computing, and the neural network computing includes training, testing, and applying of a neural network. The testing of the neural network is optional. In the embodiment, the target function is a positioning function.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

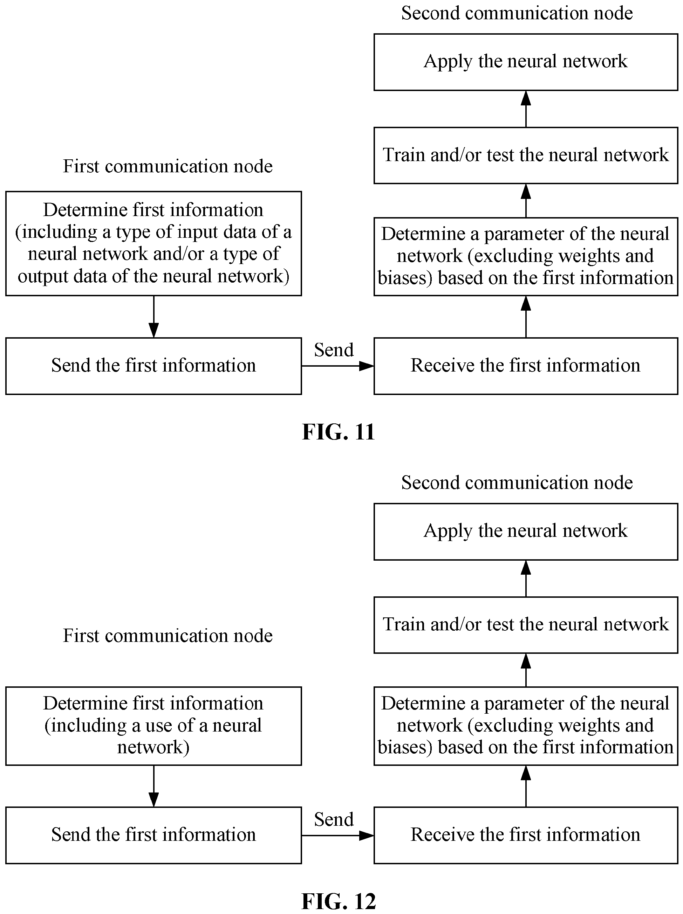

FIG. 11 is another schematic diagram of neural network computing distributed in different nodes according to an embodiment. As shown in FIG. 11, the first communication node sends first information to the second communication node, where the first information is used for the second communication node to perform applying of the neural network.

The first information may include a type of input data of the neural network, and the type of input data includes at least one of RSRP or a delay.

The first information may include a type of output data of the neural network, for example, the type of output data is indicated as an x-axis coordinate of a geographical location, a y-axis coordinate of the geographical location, and a z-axis coordinate of the geographical location.

The second communication node receives the first information sent by the first communication node. The first information includes the type of input data of the neural network and/or the type of output data of the neural network.

The second communication node receives the first information from the first communication node and determines a parameter of the neural network, that is, a structure of the neural network based on the first information.

The second communication node trains, tests, and applies the neural network based on the determined neural network.

Alternatively, the second communication node trains and applies the neural network based on the determined neural network.

Alternatively, the second communication node applies the neural network based on the determined neural network.

In the applying of the neural network, the second communication node inputs actual input data into the neural network to obtain actual output data of the neural network, where the actual output data represent output data corresponding to the target function in practical application, for example, a target geographical location.

## Embodiment ten

In the embodiment, a target function is implemented through neural network computing, and the neural network computing includes a training, testing, and applying of a neural network. The testing of the neural network is optional.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

FIG. 12 is another schematic diagram of neural network computing distributed in different nodes according to an embodiment. As shown in FIG. 12, the first communication node sends first information to the second communication node, where the first information is used for the second communication node to apply the neural network.

The first information includes a use of the neural network, and the use may include at least one of positioning, beam management (beam acquisition or beam prediction), CSI prediction, mobility management, time domain and/or frequency domain resource prediction, channel estimation, or LOS/NLOS channel identification.

For example, the first information includes an indication of the use indicating that the neural network is used for positioning.

The second communication node receives the first information sent by the first communication node. The first information includes the use of the neural network. The second communication node implements the target function and obtains actual output data through the neural network computing. For example, the target function is a positioning function, and the obtained output data are coordinates of a geographical location.

The second communication node receives the first information from the first communication node and determines a parameter of the neural network, that is, a structure of the neural network based on the first information.

The second communication node trains, tests, and applies the neural network based on the determined neural network.

Alternatively, the second communication node trains and applies the neural network based on the determined neural network.

Alternatively, the second communication node applies the neural network based on the determined neural network.

In the applying of the neural network, the second communication node inputs actual input data into the neural network to obtain the actual output data of the neural network, where the actual output data represent output data corresponding to the target function in practical application, for example, a target geographical location.

The preceding solution includes an operation of obtaining the parameter of the neural network by the second communication node based on the first information. To make the operation clearer, an example in which the parameter of the neural network is the type of input/output data is used for describing how the second communication node obtains the type of input/output data of the neural network based on the first information.

The first information is used for the neural network computing of the second communication node. The first information received by the second communication node includes the positioning function. Therefore, the second communication node determines that the type of output data of the neural network is the coordinates of the geographical location. Therefore, the second communication node determines that the type of output data is one of the types below.

Output data (or neurons in an output layer) correspond to an abscissa and ordinate of two-dimensional geographical coordinates. Output data (or neurons in an output layer) are a relative geographical location and correspond to a radius and azimuth of polar coordinates. Output data (or neurons in an output layer) are an x-axis coordinate, y-axis coordinate, and z-axis coordinate of three-dimensional geographical coordinates.

Output data (or neurons in an output layer) are a relative geographical location and correspond to a radius, azimuth, and inclination of polar coordinates in a polar coordinate system.

Thus, the second communication node may determine the type of preceding output data according to the information that the neural network is used for positioning.

The first information is used for the neural network computing of the second communication node. The first information received by the second communication node includes the positioning function. Therefore, the second communication node determines that the input data of the neural network are input data having a relationship with the outputted geographical location data. That the input data have a relationship with the outputted geographical location data means that after the input data are used for training the neural network and calculating output data of the neural network, the geographical location data may be obtained as the output data.

For example, the second communication node determines that the type of input data is one of: RSRP between the second communication node and a first positioning anchor, RSRP between the second communication node and a second positioning anchor, RSRP between the second communication node and a third positioning anchor, RSRP between the second communication node and a fourth positioning anchor, a delay between the second communication node and a first positioning anchor, a delay between the second communication node and a second positioning anchor, a delay between the second communication node and a third positioning anchor, or a delay between the second communication node and a fourth positioning anchor. Thus, the second communication node may determine the preceding type of input data according to the information that the neural network is used for positioning.

**Embodiment eleven**

In the embodiment, a target function is implemented through neural network computing, and the neural network computing includes training, testing, and applying of a neural network. The testing of the neural network is optional.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

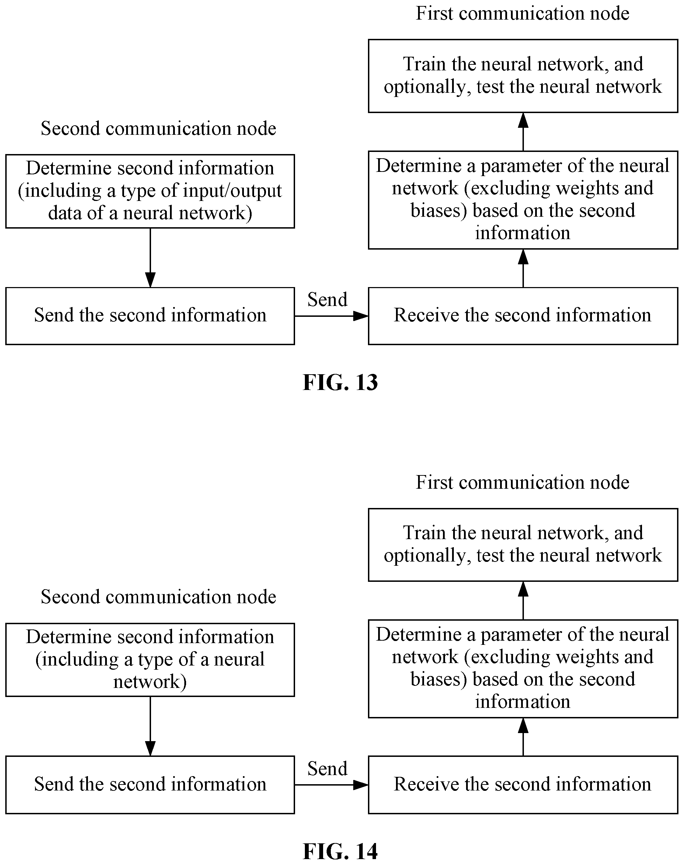

FIG. 13 is another schematic diagram of neural network computing distributed in different nodes according to an embodiment. As shown in FIG. 13, the second communication node sends second information to the first communication node, where the second information is information related to the neural network. The second information is used for the first communication node to train the neural network. The second information may include a type of input data of the neural network.

For example, the second communication node notifies, through the second information, eight types of input data of the neural network, which include: RSRP between the second communication node and a first positioning anchor, RSRP between the second communication node and a second positioning anchor, RSRP between the second communication node and a third positioning anchor, RSRP between the second communication node and a fourth positioning anchor, a delay between the second communication node and the first positioning anchor, a delay between the second communication node and the second positioning anchor, a delay between the second communication node and the third positioning anchor, and a delay between the second communication node and the fourth positioning anchor, respectively.

The second information may include one or more types of output data of the neural network. For example, the second communication node notifies, through the second information, three types of output data of the neural network. The three types of output data are an x-axis coordinate of a geographical location, a y-axis coordinate of the geographical location, and a z-axis coordinate of the geographical location in a geography coordinate system, respectively.

The first communication node receives the second information sent by the second communication node. The second information includes the type of input/output data of the neural network. For example, an input layer of the neural network includes eight neurons. Data types in a test dataset used by the eight neurons are RSRP, RSRP, RSRP, RSRP, delay, delay, delay, and delay, respectively; and an output layer of the neural network includes three neurons, and the three neurons correspond to the x axis, the y axis, and the z axis in a geographical coordinate system in the test set, respectively.

The first communication node determines some parameters of the neural network based on the received second information. In addition to the type of input/output data of the neural network, the parameters of the neural network here may also include some other parameters matching the type of input/output data of the neural network, for example, the number of layers of the neural network and the number of neurons in each hidden layer. In this case, the first communication node determines a neural network model (excluding weights and biases of the neural network model) by using the parameters of the neural network.

Next, the first communication node trains and tests (in case the testing is required) the neural network by using the determined neural network model (excluding the weights and biases of the neural network model). The first communication node obtains the weights and biases of the neural network by training the neural network.

Optionally, the following may be performed additionally or separately.

The first communication node sends first information to the second communication node, where the first information includes the weights and biases of the neural network.

The first communication node sends first information to the second communication node, where the first information includes the weights and biases of the neural network. Optionally, the first information may also include the number of layers of the neural network and the number of neurons in each hidden layer.

When the first information excludes the number of layers of the neural network and the number of neurons in each hidden layer, the second communication node may determine the number of layers of the neural network and the number of neurons in each hidden layer in the manner below.

The number of layers of the neural network and the number of neurons in each hidden layer are determined and notified to the first communication node by the second communication node. The number of layers of the neural network and the number of neurons in each hidden layer are default values. The second communication node receives the first information and determines the neural network (structure) based on the first information. The second communication node applies the neural network based on the determined neural network. In the applying of the neural network, the second communication node inputs actual input data into the neural network to obtain actual output data of the neural network, where the actual output data represent output data corresponding to the target function in practical application, for example, a target geographical location. For example, the actual input data here are measured data of the second communication node, and the measured data are the RSRP, RSRP, RSRP, RSRP, delay, delay, delay, and delay that are measured between the second communication node and the four positioning anchors.

**Embodiment twelve**

In the embodiment, a target function is implemented through neural network computing, and the neural network computing includes a training, testing, and applying of a neural network. The testing of the neural network is optional.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

FIG. 14 is another schematic diagram of neural network computing distributed in different nodes according to an embodiment. As shown in FIG. 14, the second communication node sends second information to the first communication node, where the second information is information related to the neural network. The second information is used for the first communication node to train the neural network. The second information is a type of the neural network supportable by the second communication node, and the type of the neural network includes at least one of a fully connected neural network, a CNN, an RNN, or an LSTM neural network.

The first communication node receives the second information sent by the second communication node.

The second information includes the type of the neural network supportable by the second communication node.

The first communication node determines some parameters of the neural network based on the received second information. In addition to the type of the neural network, the parameters of the neural network here may also include some other parameters matching the type of the neural network, for example, the number of layers of the neural network and the number of neurons in each layer. The first communication node selects one type of the neural network from network types supportable by the second communication node, and the first communication node determines some other parameters matching the network type, for example, the number of layers of the neural network and the number of neurons in each layer.

In this case, the first communication node determines a neural network model (excluding weights and biases of the neural network model) by using the parameters of the neural network.

Next, the first communication node trains and tests (in case that the testing is required) the neural network by using the determined neural network model (excluding the weights and biases of the neural network model). The first communication node obtains the weights and biases of the neural network by training the neural network.

Optionally, the following may be performed additionally or separately.

The first communication node sends first information to the second communication node, where the first information includes the weights and biases of the neural network.

The second communication node receives the first information and determines the parameters of the neural network (that is, a structure of the neural network) based on the first information. The second communication node applies the neural network based on the determined neural network. In the applying of the neural network, the second communication node inputs actual input data into the neural network to obtain actual output data of the neural network, where the actual output data represent actual output data corresponding to the target function in practical application.

**Embodiment thirteen**

In the embodiment, a target function is implemented through neural network computing, and the neural network computing includes a training, testing, and applying of a neural network. The testing of the neural network is optional. In the embodiment, the target function is a beam acquisition function.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

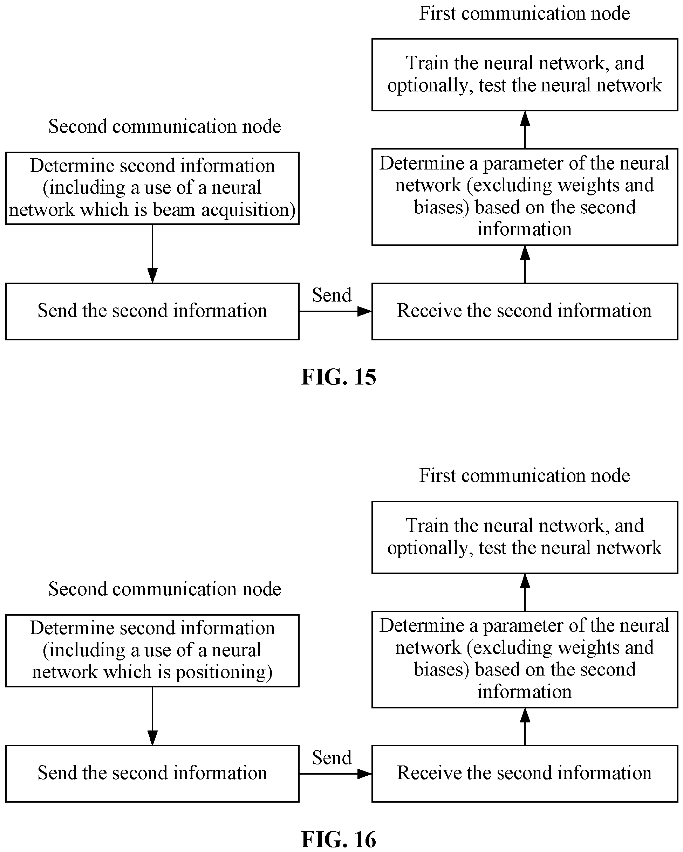

FIG. 15 is another schematic diagram of neural network computing distributed in different nodes according to an embodiment. As shown in FIG. 15, the second communication node sends second information to the first communication node, where the second information is information related to the neural network. The second information is used for the first communication node to train the neural network. The second information includes a use of the neural network. In the embodiment, the use of the neural network is beam acquisition. The beam acquisition here is one of: acquisition of transmitting beam, that is, acquisition of a transmitting beam of the first communication node; acquisition of receiving beam, that is, acquisition of a receiving beam of the second communication node; or acquisition of transmitting beam and receiving beam, that is, simultaneous acquisition of a transmitting beam of the first communication node and a receiving beam of the second communication node.

The first communication node receives the second information sent by the second communication node. The first communication node determines, based on the use of the neural network indicated in the received second information, some parameters (such as a type of input data and a type of output data) of the neural network suitable for the use based on the use of the neural network, that is, determines a neural network model (excluding weights and biases of the neural network).

The first communication node trains the neural network based on the determined neural network to obtain the weights and biases of the neural network.

The preceding solution includes an operation of determining some parameters of the neural network by the first communication node based on the use (beam acquisition) of the neural network included in the second information. To make the operation clearer, an example in which the parameter of the neural network is the type of input/output data is used for describing how the first communication node determines the parameter of the neural network based on the use of the neural network included in the second information.

The first communication node determines through the received second information that the neural network is used for the beam acquisition function. Therefore, the first communication node determines that the type of output data of the neural network is one of: an index of the transmitting beam, an index of the receiving beam, a joint index of the transmitting beam and the receiving beam.

Thus, the first communication node may determine the type of preceding output data of the neural network according to the information that the neural network is used for beam acquisition.

The first communication node determines through the received second information that the neural network is used for the beam acquisition function. Therefore, the first communication node may determine the type of input data of the neural network. The type of input data is one of the types below.

Input data (or neurons in an input layer) correspond to an abscissa and ordinate of two-dimensional geographical coordinates. Input data (or neurons in an input layer) are a relative geographical location and correspond to a radius and azimuth of polar coordinates. Input data (or neurons in an input layer) are an x-axis coordinate, y-axis coordinate, and z-axis coordinate of three-dimensional geographical coordinates in a geographical coordinate system.

Input data (or neurons in an input layer) are a relative geographical location and correspond to a radius, azimuth, and inclination of polar coordinates in a polar coordinate system.

Thus, the first communication node may determine the type of preceding input data of the neural network according to the information that the neural network is used for beam acquisition.

How the first communication node determines the parameters of the neural network, such as the type of input/output data of the neural network, based on the use of the neural network included in the second information has been described so far.

Optionally, the following may be performed additionally or separately.

The first communication node sends first information to the second communication node, where the first information includes the weights and biases of the neural network.

The second communication node receives the first information and determines the parameters of the neural network (that is, a structure of the neural network) based on the first information. The second communication node applies the neural network based on the determined neural network. In the applying of the neural network, the second communication node inputs actual input data into the neural network to obtain actual output data of the neural network, where the actual output data represent actual output data corresponding to the target function in practical application.

**Embodiment fourteen**

In the embodiment, a target function is implemented through neural network computing, and the neural network computing includes a training, testing, and applying of a neural network. The testing of the neural network is optional.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

FIG. 16 is another schematic diagram of neural network computing distributed in different nodes according to an embodiment. As shown in FIG. 16, the second communication node sends second information to the first communication node, where the second information is information related to the neural network.

The second information includes a use of the neural network, and the use of the neural network is positioning in the embodiment.

The first communication node receives the second information sent by the second communication node. The first communication node determines, based on the use of the neural network included in the received second information, some parameters (such as a type of input data and a type of output data) of the neural network suitable for the use based on the use of the neural network, that is, determines a neural network model (excluding weights and biases of the neural network).

The first communication node trains the neural network based on the determined neural network to obtain the weights and biases of the neural network.

The preceding solution includes an operation of determining some parameters of the neural network by the first communication node based on the use (positioning) of the neural network included in the second information. To make the operation clearer, an example in which the parameter of the neural network is the type of output data is used for describing how the first communication node determines the parameter of the neural network based on the use of the neural network included in the second information.

The first communication node determines through the received second information that the neural network is used for the positioning function. Therefore, the first communication node determines that the type of output data of the neural network is one of the types below.

The type of output data is an abscissa and ordinate in a two-dimensional geographical coordinate system; the type of output data is a relative geographical location and corresponds to a radius and azimuth in a polar coordinate system; the type of output data is an x-axis coordinate, y-axis coordinate, and z-axis coordinate in a three-dimensional geographical coordinate system; and the type of output data is a relative geographical location and corresponds to a radius, azimuth, and inclination in a polar coordinate system.

Thus, the first communication node may determine the type of preceding output data of the neural network (that is, the parameter of the neural network) according to the information that the neural network is used for positioning.

How the first communication node determines the parameter of the neural network (the type of output data of the neural network) based on the use of the neural network included in the second information has been described so far.

Optionally, the following may be performed additionally or separately.

The first communication node sends first information to the second communication node, where the first information includes the weights and biases of the neural network.

The second communication node receives the first information and determines the parameters of the neural network (that is, a structure of the neural network) based on the first information. The second communication node applies the neural network based on the determined neural network. In the applying of the neural network, the second communication node inputs actual input data into the neural network to obtain actual output data of the neural network, where the actual output data represent actual output data corresponding to the target function in practical application.

**Embodiment fifteen**

In the embodiment, a target function is implemented through neural network computing, and the neural network computing includes a training, testing, and applying of a neural network. The testing of the neural network is optional. In the embodiment, the target function is a beam acquisition function.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

The second communication node sends second information to the first communication node, where the second information includes information related to the neural network. The second information is used for determining at least one of a parameter of the neural network, a training set, a verification set, or a test set.

Optionally, the second information includes a virtualization model of TXRUs of the second communication node. The virtualization model of the TXRUs is used for representing a mapping type between TXRUs and antenna elements. The virtualization model of the TXRUs includes at least one of a subarray partition model or a fully connected model.

In the subarray partition model as the virtualization model of the TXRUs, all antenna elements in the same polarization direction and in one antenna panel are divided into multiple antenna subarrays. Different antenna subarrays generally include the same number of antenna elements. In the subarray partition model as the virtualization model of the TXRUs, one TXRU is mapped to antenna elements in one antenna subarray. The antenna elements in one antenna subarray include antenna elements in M rows and N columns.

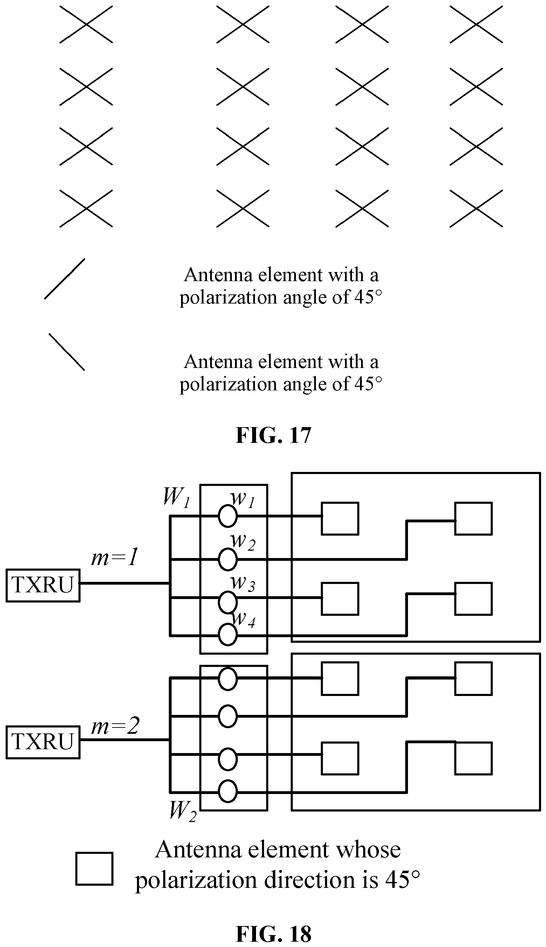

FIG. 17 is a schematic diagram of the distribution of antenna elements in an antenna panel according to an embodiment. Antenna arrays in each polarization direction in FIG. 17 may be divided into two antenna subarrays (where each antenna subarray includes antenna elements in M rows and N columns, and M=2, N=2). For two antenna subarrays whose polarization direction is 45°, a mapping relationship between TXRUs and antenna elements is shown in FIG. 18.

FIG. 18 is a schematic diagram of a mapping relationship between TXRUs and antenna elements according to an embodiment. In FIG. 18, the virtualization model of the TXRUs is the subarray partition model. In FIG. 18, one TXRU is mapped to antenna elements in M rows and N columns, where M=2 and N=2. In FIG. 18, virtualization weights of a TXRU with a serial number of $m = 1$ are $w_1$, $w_2$, $w_3$, and $w_4$.

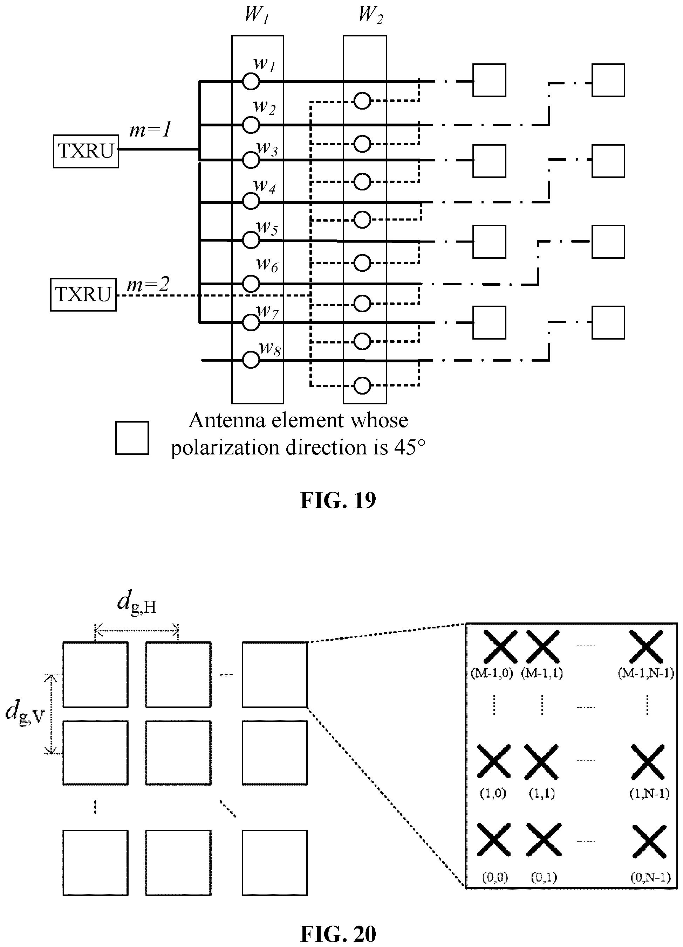

FIG. 19 is a schematic diagram of a virtualization model of TXRUs according to an embodiment. In FIG. 19, the virtualization model of the TXRUs is the fully connected model. In the fully connected model as the virtualization model of the TXRUs, one TXRU is mapped to all antenna elements in the same polarization direction and in one antenna panel or one TXRU is mapped to all antenna elements in all polarization directions and in one antenna panel. Different TXRUs may be mapped to the same antenna elements but may have different virtualization weights. If one TXRU is mapped to all the antenna elements in the same polarization direction (45° polarization) and in one antenna panel in FIG. 17, the corresponding virtualization model of the TXRUs is shown in FIG. 19. In FIG. 19, the virtualization weights of the TXRU with a serial number of $m = 1$ are $w_1$, $w_2$, $w_3$, $w_4$, $w_5$, $w_6$, $w_7$, and $w_8$. In FIG. 19, $m$ denotes the serial number of the TXRU. Similarly, in FIG. 17, another TXRU may be mapped to all antenna elements in another polarization direction (-45° polarization) and in one antenna panel. The details are not repeated here.

Optionally, the second information includes a mapping relationship between TXRUs of the second communication node and antenna elements of the second communication node. The mapping relationship between TXRUs and antenna elements is represented in the following manner: the second information includes the number of rows of antenna elements to which one TXRU is mapped, the number of columns of antenna elements to which one TXRU is mapped, a row spacing of antenna elements to which one TXRU is mapped, and a column spacing of antenna elements to which one TXRU is mapped.

Optionally, the second information includes spatial distribution information of antenna panels of the second communication node (for example, the number of rows of the antenna panels, the number of columns of the antenna panels, a row spacing of the antenna panels, and a column spacing of the antenna panels). FIG. 20 is a schematic diagram of the spatial distribution of antenna panels according to an embodiment. As shown in FIG. 20, each antenna panel includes antenna elements in two polarization directions, each polarization direction of each antenna panel includes antenna elements in M rows and N columns, the column spacing (or horizontal spacing) of the antenna panels is $d_{g,H}$, and the row spacing (or vertical spacing) of the antenna panels is $d_{g,V}$.

Optionally, the second information includes a polarization manner of antenna elements of the second communication node. The polarization manner of the antenna elements here includes co-polarized antenna elements and cross-polarized antenna elements. The co-polarized antenna elements mean that all antenna elements in one antenna panel have the same polarization angle. The cross-polarized antenna elements mean that a half of all antenna elements in one antenna panel have the same polarization angle, the other half of the antenna elements have the same polarization angle, and a difference between the polarization angle of the first half of the antenna elements and the polarization angle of the second half of the antenna elements is 90° or -90°.

Optionally, the second information includes a polarization angle of an antenna element of the second communication node.

Optionally, the second information includes the height of an antenna of the second communication node.

The first communication node receives the second information sent by the second communication node. The first communication node determines at least one of the parameter of the neural network, the training set, the verification set, or the test set by using the second information.

Optionally, the first communication node selects a training set, verification set (optional), and test set (optional) suitable for the mapping relationship between the TXRUs of the second communication node and the antenna elements of the second communication node.

Optionally, the first communication node determines data representing the mapping relationship between TXRUs and antenna elements (for example, the number of rows of the antenna elements to which one TXRU is mapped, the number of columns of the antenna elements to which one TXRU is mapped, the row spacing of the antenna elements to which one TXRU is mapped, and the column spacing of the antenna elements to which one TXRU is mapped) to be part of input (input data) of the neural network.

Optionally, the first communication node selects a training set, verification set (optional), and test set (optional) suitable for the spatial distribution of the antenna panels of the second communication node.

Optionally, the second information includes the spatial distribution information of the antenna panels of the second communication node (for example, the number of rows of the antenna panels, the number of columns of the antenna panels, the row spacing (or the vertical spacing) of the antenna panels, and the column spacing (or the horizontal spacing) of the antenna panels), and the spatial distribution information of the antenna panels of the second communication node is determined as part of the input (input data) of the neural network.

Optionally, the first communication node selects a training set, verification set (optional), and test set (optional) suitable for the polarization manner of the antenna elements of the second communication node. The polarization manner of the antenna elements here includes the co-polarized antenna elements and the cross-polarized antenna elements. The co-polarized antenna elements mean that all antenna elements in one antenna panel have the same polarization angle. The cross-polarized antenna elements mean that a half of all antenna elements in one antenna panel have the same polarization angle, the other half of the antenna elements have the same polarization angle, and the difference between the polarization angle of the first half of the antenna elements and the polarization angle of the second half of the antenna elements is 90° or -90°.

Optionally, the first communication node determines the polarization manner of the antenna elements of the second communication node as part of the input (input data) of the neural network.

Optionally, the first communication node selects a training set, verification set (optional), and test set (optional) suitable for the polarization angle of the antenna element of the second communication node.

Optionally, the first communication node determines the polarization angle of the antenna element of the second communication node as part of the input (input data) of the neural network.

Optionally, the first communication node selects a training set, verification set (optional), and test set (optional) suitable for the height of the antenna of the second communication node.

Optionally, the first communication node determines the height of the antenna of the second communication node as part of the input (input data) of the neural network.

The first communication node determines other parameters of the neural network (excluding weights and biases), that is, determines a neural network model (excluding the weights and biases of the neural network model).

Next, the first communication node trains and tests (optionally) the neural network by using the determined neural network model (excluding the weights and biases of the neural network model). The first communication node obtains the weights and biases of the neural network by training the neural network.

Optionally, the following may be performed additionally or separately.

The first communication node sends first information to the second communication node, where the first information includes the weights and biases of the neural network and a type of the neural network.

The second communication node receives the first information from the first communication node and determines the neural network (structure) based on the first information. The second communication node applies the neural network based on the determined neural network. The second communication node inputs actual input data into the neural network to obtain actual output data of the neural network, where the actual output data represent output data corresponding to the target function in practical application, for example, a target geographical location.

**Embodiment sixteen**

In the embodiment, a target function is implemented through neural network computing, and the neural network computing includes a training, testing, and applying of a neural network. The testing of the neural network is optional. In the embodiment, the target function is a beam acquisition function.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

The second communication node sends second information to the first communication node, where the second information includes information related to the neural network. The second information is used for determining at least one of a parameter of the neural network, a training set, a verification set, or a test set.

The second information includes at least one of: a gain of an antenna element in a maximum gain direction; an angle corresponding to a horizontal beam width of 3 dB; an angle corresponding to a vertical beam width of 3 dB; a radiation pattern of an antenna element including a horizontal radiation pattern, a vertical radiation pattern, a spatial three-dimensional radiation pattern, and an omnidirectional antenna; or an angle of a normal direction of an antenna panel.

The first communication node receives the second information sent by the second communication node. The first communication node determines at least one of the parameter of the neural network, the training set, the verification set, or the test set by using the second information.

Optionally, the first communication node selects a training set, verification set (optional), and test set (optional) suitable for the second information.

Optionally, the first communication node determines at least one of the preceding information in the second information as part of input (input data) of the neural network.

Optionally, the first communication node selects output data of the neural network based on the preceding information included in the second information. To make how to select the output data of the neural network based on the second information clearer and easier to understand, an example is given here. For example, multiple output data of the neural network correspond to both angles and beamforming gains of the main lobe directions corresponding to multiple beam indexes respectively. Using the preceding information included in the second information, a type of orientation is determined to be a directional antenna and directional antenna gains in all directions of the directional antenna are determined. Therefore, the first communication node may obtain a beam corresponding to each beam index and consider a combined gain of a beamforming gain and a directional antenna gain. The first communication node selects a beam with a maximum combined gain.

The first communication node determines other parameters of the neural network (excluding weights and biases), that is, determines a neural network model (excluding the weights and biases of the neural network model).

The first communication node trains and tests (optionally) the neural network by using the determined neural network model (excluding the weights and biases of the neural network model). The first communication node obtains the weights and biases of the neural network by training the neural network.

Optionally, the following may be performed additionally or separately.

The first communication node sends first information to the second communication node, where the first information includes the weights and biases of the neural network and a type of the neural network. The second communication node receives the first information from the first communication node and determines the neural network (structure) based on the first information. The second communication node applies the neural network based on the determined neural network. The second communication node inputs actual input data into the neural network to obtain actual output data of the neural network, where the actual output data represent output data corresponding to the target function in practical application, for example, a target geographical location.

**Embodiment seventeen**

In the embodiment, a target function is implemented through neural network computing, and the neural network computing includes a training, testing, and applying of a neural network. The testing of the neural network is optional.

For the neural network computing for implementing the target function, a first communication node and a second communication node implement different phases (functions) of the neural network computing. The first communication node implements the phase (function) of training of the neural network. In case that the testing of the neural network is required, the first communication node also implements the phase (function) of testing of the neural network. The second communication node implements the phase (function) of applying of the neural network.

The second communication node sends second information to the first communication node, where the second information is information related to the neural network. The second information is used for the first communication node to train the neural network. The second information includes capability-related information of the second communication node, and the capability-related information includes at least one of: a maximum depth/number of layers of the neural network supportable by the second communication node; a maximum number of neurons of the neural network supportable by the second communication node; or for one layer of the neural network, a maximum number of neurons supportable by the second communication node in the layer.

The first communication node receives the second information sent by the second communication node. The second information selects, based on the capability-related information of the second communication node, a parameter of the neural network supportable by the second communication node.

In this case, the first communication node determines a neural network model (excluding weights and biases of the neural network model) by using the parameter of the neural network.

The first communication node trains and tests (In case that the testing is required) the neural network by using the determined neural network model (excluding the weights and biases of the neural network model). The first communication node obtains the weights and biases of the neural network by training the neural network.

Optionally, the following may be performed additionally or separately.

The first communication node sends first information to the second communication node, where the first information includes the weights and biases of the neural network.

The second communication node receives the first information and determines the parameter of the neural network (that is, a structure of the neural network) based on the first information. The second communication node applies the neural network based on the determined neural network. In the applying of the neural network, the second communication node inputs actual input data into the neural network to obtain actual output data of the neural network, where the actual output data represent actual output data corresponding to the target function in practical application.

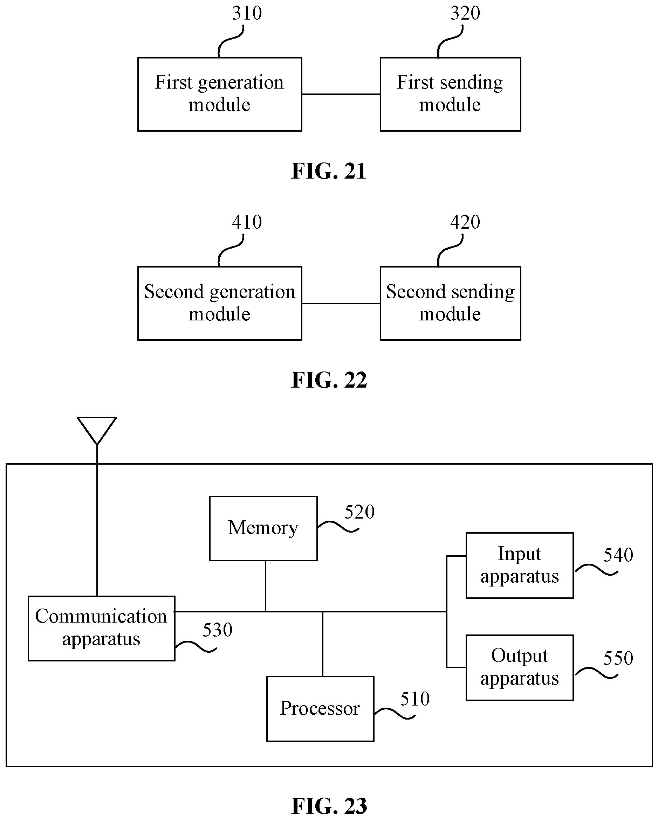

Embodiments of the present application further provide an information sending apparatus. FIG. 21 is a structural diagram of an information sending apparatus according to an embodiment. As shown in FIG. 21, the information sending apparatus includes a first generation module 310 and a first sending module 320.

The first generation module 310 is configured to generate a parameter of a neural network. The first sending module 320 is configured to send first information, where the first information includes the parameter of the neural network.

According to the information sending apparatus of the embodiment, a first communication node generates the parameter of the neural network and sends the parameter to a second communication node so that a network side helps a UE side to determine the parameter of the neural network, thereby reducing a processing burden of the UE side.

In an embodiment, the information sending apparatus further includes at least one of a first training module or a first testing module. The first training module is configured to train the neural network using the parameter of the neural network. The first testing module is configured to test the neural network using the parameter of the neural network.

In an embodiment, the parameter of the neural network is used for the second communication node to perform at least one of the following operations: training the neural network, testing the neural network, or applying the neural network.

In an embodiment, training the neural network includes inputting sample data into the neural network, and adjusting the parameter of the neural network to enable output of the neural network to match with label data corresponding to the sample data; testing the neural network includes inputting test data into the neural network, and determining a performance index of the neural network according to a degree of match between the output of the neural network and label data corresponding to the test data; and applying the neural network includes inputting actual input data into the neural network to obtain actual output data of the neural network.

In an embodiment, the parameter of the neural network includes weights and biases corresponding to neurons in the neural network.

In an embodiment, the parameter of the neural network includes a type of the neural network; and the type of the neural network includes at least one of a fully connected neural network, a CNN, an RNN, or an LSTM neural network.

In an embodiment, the parameter of the neural network includes a depth of the neural network.

In an embodiment, the parameter of the neural network includes the number of neurons included in each of one or more layers of the neural network.

In an embodiment, the parameter of the neural network includes at least one of a type of input data of the neural network or a type of output data of the neural network.

In an embodiment, the parameter of the neural network includes a function of the neural network; and the function of the neural network includes at least one of positioning, beam management, CSI prediction, mobility management, time domain resource prediction, frequency domain resource prediction, channel estimation, or LOS/NLOS channel identification.

In an embodiment, the information sending apparatus further includes a first receiving module.

The first receiving module is configured to, before the parameter of the neural network is generated, receive second information reported by the second communication node, where the neural network is trained according to the second information.

In an embodiment, the information sending apparatus further includes a selection module.

The selection module is configured to select a training set and/or a test set and/or a verification set according to the second information.

The information sending device of the embodiment is based on the same concept as the information sending method of any preceding embodiment. For technical details not described in the embodiment, see any preceding embodiment. The embodiment has the same effect as the performed information sending method.

Embodiments of the present application further provide an information sending apparatus. FIG. 22 is another structural diagram of an information sending apparatus according to an embodiment. As shown in FIG. 22, the information sending apparatus includes a second generation module 410 and a second sending module 420.

The second generation module 410 is configured to generate second information, where the second information is used for a first communication node to perform neural network computing. The second sending module 420 is configured to send the second information.

According to the information sending apparatus of the embodiment, the first communication node generates a parameter of a neural network and sends the parameter to a second communication node so that a network side helps a UE side to determine the parameter of the neural network, thereby reducing a processing burden of the UE side.

In an embodiment, the information sending apparatus further includes a second receiving module and a performing module.

The second receiving module is configured to receive first information, where the first information includes the parameter of the neural network. The performing module is configured to perform a corresponding operation on the neural network according to the first information.

In an embodiment, the performing module is configured to perform at least one of the operations below.

The neural network is trained according to the first information. The neural network is tested according to the first information. The neural network is applied according to the first information.

In an embodiment, the second information includes a type of the neural network supported by the second communication node; and the type of the neural network includes at least one of a fully connected neural network, a CNN, an RNN, or an LSTM neural network.

In an embodiment, the second information includes at least one of a maximum depth of the neural network supported by the second communication node, a maximum number of neurons of the neural network supported by the second communication node, or a maximum number of neurons included in each of one or more layers of the neural network supported by the second communication node.

In an embodiment, the second information includes a function of the neural network; and the function of the neural network includes at least one of positioning, beam management, CSI prediction, mobility management, time domain resource prediction, frequency domain resource prediction, channel estimation, or LOS/NLOS channel identification.

In an embodiment, the second information includes at least one of a type of input data of the neural network or a type of output data of the neural network.

In an embodiment, the second information includes a virtualization model of TXRUs of the second communication node; and the virtualization model of the TXRUs includes at least one of a subarray partition model or a fully connected model.

In an embodiment, the second information includes at least one of a mapping relationship between TXRUs of the second communication node and antenna elements of the second communication node, spatial distribution information of antenna panels of the second communication node, or a polarization manner of antenna elements of the second communication node.

In an embodiment, the second information includes at least one of a polarization angle of an antenna element of the second communication node or the height of an antenna of the second communication node.

In an embodiment, the second information includes the mapping relationship between the TXRUs of the second communication node and the antenna elements of the second communication node; and the mapping relationship includes at least one of the number of rows of antenna elements to which one TXRU is mapped, the number of columns of antenna elements to which one TXRU is mapped, a row spacing of antenna elements to which one TXRU is mapped, or a column spacing of antenna elements to which one TXRU is mapped.

In an embodiment, the second information includes the spatial distribution information of the antenna panels of the second communication node; and the spatial distribution information of the antenna panels includes at least one of the number of rows of the antenna panels, the number of columns of the antenna panels, a row spacing of the antenna panels, or a column spacing of the antenna panels.

In an embodiment, the second information includes the polarization manner of the antenna elements of the second communication node; and the polarization manner includes at least one of co-polarized antenna elements or cross-polarized antenna elements.

In an embodiment, the second information includes at least one of a gain of an antenna element in a maximum gain direction, an angle corresponding to a set antenna attenuation in a horizontal direction, an angle corresponding to a set antenna attenuation in a vertical direction, a radiation pattern of an antenna element, or an angle of a normal direction of an antenna panel.

In an embodiment, the radiation pattern includes at least one of a horizontal radiation pattern, a vertical radiation pattern, a spatial three-dimensional radiation pattern, or an omnidirectional antenna.

In an embodiment, the set antenna attenuation includes an attenuation relative to an antenna gain in a maximum antenna gain direction.

The information sending device of the embodiment is based on the same concept as the information sending method of any preceding embodiment. Technical details about the information sending device not described in the embodiment, can refer to any preceding embodiment. The embodiment about the information sending device has the same effect as the performed information sending method.

Embodiments of the present application further provide a communication node. FIG. 23 is a hardware structural diagram of a communication node according to an embodiment. As shown in FIG. 23, the communication node provided by the present application includes a memory 520, a processor 510, and a computer program stored in the memory and executable by the processor, where the processor 510 executes the computer program to perform the preceding information sending method.

The communication node may further include the memory 520. One or more processors 510 may be provided in the communication node, and one processor 510 is shown as an example in FIG. 23. The memory 520 is configured to store one or more programs which, when executed by the one or more processors 510, cause the one or more processors 510 to perform the information sending method in the embodiments of the present application.

The communication node further includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners. In FIG. 23, the connection via a bus is shown as an example.

The input apparatus 540 may be configured to receive inputted digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules corresponding to the information sending method in the embodiments of the present application (for example, the first generation module 310 and the first sending module 320 in the information sending apparatus). The memory 520 may include a program storage region and a data storage region, where the program storage region may store an operating system and an application program required by at least one function, and the data storage region may store data created according to the use of the communication node. Additionally, the memory 520 may include a high-speed random-access memory and may also include a nonvolatile memory such as at least one magnetic disk memory, a flash memory, or another nonvolatile solid-state memory. In some examples, the memory 520 may include memories which are remotely disposed relative to the processor 510, and these remote memories may be connected to the communication node via a network. Examples of the preceding network include, but are not limited to, the Internet, an intranet, a local area network, a mobile communication network, and a combination thereof.

Embodiments of the present application further provide a storage medium in which a computer program is stored, and the computer program, when executed by a processor, causes the processor to perform the information sending method according to any embodiment of the present application. The information sending method includes generating a parameter of a neural network; and sending first information, where the first information includes the parameter of the neural network. Alternatively, the information sending method includes generating second information, where the second information is used for a first communication node to perform neural network computing; and sending the second information.

A computer storage medium in embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples (a non-exhaustive list) of the computer-readable storage medium include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of the present application and are not intended to limit the scope of the present application.

It is to be understood by those skilled in the art that the term "user equipment" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM, or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. An information sending method, applied by a first communication node, comprising:

   generating a parameter of a neural network; and sending first information, wherein the first information comprises the parameter of the neural network.

2. The information sending method according to claim 1, further comprising at least one of:

   training the neural network using the parameter of the neural network; or
   testing the neural network using the parameter of the neural network.

3. The information sending method according to claim 1, wherein the parameter of the neural network is used for a second communication node to perform at least one of the following operations:

training the neural network;
testing the neural network; or
applying the neural network.

4. The information sending method according to claim 3, wherein

training the neural network comprises:
inputting sample data into the neural network, and adjusting the parameter of the neural network to enable output of the neural network to match with label data corresponding to the sample data;
testing the neural network comprises:
inputting test data into the neural network, and determining a performance index of the neural network according to a degree of match between the output of the neural network and label data corresponding to the test data; and
applying the neural network comprises:
inputting actual input data into the neural network to obtain actual output data of the neural network.

5. The information sending method according to claim 1, wherein the parameter of the neural network comprises weights and biases corresponding to neurons in the neural network.

6. The information sending method according to claim 1, wherein the parameter of the neural network comprises a type of the neural network; and
the type of the neural network comprises at least one of:
a fully connected neural network, a convolutional neural network, CNN, a recurrent neural network, RNN, or a long short-term memory, LSTM, neural network.

7. The information sending method according to claim 1, wherein the parameter of the neural network comprises a depth of the neural network.

8. The information sending method according to claim 1, wherein the parameter of the neural network comprises a number of neurons comprised in each of one or more layers of the neural network.

9. The information sending method according to claim 1, wherein the parameter of the neural network comprises at least one of: a type of input data of the neural network or a type of output data of the neural network.

10. The information sending method according to claim 1, wherein the parameter of the neural network comprises a function of the neural network; and
the function of the neural network comprises at least one of: positioning, beam management, channel state information, CSI, prediction, mobility management, time domain resource prediction, frequency domain resource prediction, channel estimation, or line-of-sight/non-line-of-sight, LOS/NLOS, channel identification.

11. The information sending method according to claim 1, before generating the parameter of the neural network, further comprising:
receiving second information reported by a second communication node, wherein the neural network is trained according to the second information.

12. The information sending method according to claim 11, further comprising:
selecting at least one of a training set, a test set, or a verification set according to the second information.

13. An information sending method, applied by a second communication node, comprising:

generating second information, wherein the second information is used for a first communication node to perform neural network computing; and
sending the second information.

14. The information sending method according to claim 13, further comprising:

receiving first information, wherein the first information comprises a parameter of a neural network; and
performing a corresponding operation on the neural network according to the first information.

15. The information sending method according to claim 13, wherein performing the neural network computing comprises at least one of:

training a neural network according to the second information;
testing a neural network according to the second information; or
applying a neural network according to the second information.

16. The information sending method according to claim 13, wherein the second information comprises a type of a neural network supported by the second communication node; and
the type of the neural network comprises at least one of:

a fully connected neural network, a convolutional neural network, CNN, a recurrent neural network, RNN, or a long short-term memory, LSTM, neural network.

17. The information sending method according to claim 13, wherein the second information comprises at least one of:

a maximum depth of a neural network supported by the second communication node;
a maximum number of neurons of a neural network supported by the second communication node; or,
a maximum number of neurons comprised in each of one or more layers of a neural network supported by the second communication node.

18. The information sending method according to claim 13, wherein the second information comprises a function of a neural network; and
the function of the neural network comprises at least one of: positioning, beam management, channel state information, CSI, prediction, mobility management, time domain resource prediction, frequency domain resource prediction, channel estimation, or line-of-sight/non-line-of-sight, LOS/NLOS, channel identification.

19. The information sending method according to claim 13, wherein the second information comprises at least one of: a type of input data of a neural network or a type of output data of a neural network.

20. The information sending method according to claim 13, wherein the second information comprises a virtualization model of transceiver units, TXRUs, of the second communication node; and
the virtualization model of the TXRUs comprises at least one of a subarray partition model or a fully connected model.

21. The information sending method according to claim 13, wherein the second information comprises at least one of: a mapping relationship between TXRUs of the second communication node and antenna elements of the second communication node; spatial distribution information of antenna panels of the second communication node; or, a polarization manner of antenna elements of the second communication node.

22. The information sending method according to claim 13, wherein the second information comprises at least one of: a polarization angle of an antenna element of the second communication node; or, a height of an antenna of the second communication node.

23. The information sending method according to claim 13, wherein the second information comprises a mapping relationship between TXRUs of the second communication node and antenna elements of the second communication node; and
the mapping relationship comprises at least one of: a number of rows of antenna elements to which one TXRU is mapped; a number of columns of antenna elements to which one TXRU is mapped; a row spacing of antenna elements to which one TXRU is mapped; or, a column spacing of antenna elements to which one TXRU is mapped.

24. The information sending method according to claim 13, wherein the second information comprises spatial distribution information of antenna panels of the second communication node; and
the spatial distribution information of the antenna panels comprises at least one of: a number of rows of the antenna panels, a number of columns of the antenna panels, a row spacing of the antenna panels, or a column spacing of the antenna panels.

25. The information sending method according to claim 13, wherein the second information comprises a polarization manner of antenna elements of the second communication node; and wherein the polarization manner comprises at least one of co-polarized antenna elements or cross-polarized antenna elements.

26. The information sending method according to claim 13, wherein the second information comprises at least one of:

a gain of an antenna element in a maximum gain direction;
an angle corresponding to a set antenna attenuation in a horizontal direction;
an angle corresponding to a set antenna attenuation in a vertical direction;
a radiation pattern of an antenna element; or
an angle of a normal direction of an antenna panel.

27. The information sending method according to claim 26, wherein the radiation pattern comprises at least one of a horizontal radiation pattern, a vertical radiation pattern, a spatial three-dimensional radiation pattern, or an omnidirectional antenna.

28. The information sending method according to claim 26, wherein the set antenna attenuation comprises an attenuation relative to an antenna gain in a maximum antenna gain direction.

29. A communication node, comprising a memory, a processor, and a computer program stored in the memory and executable by the processor, wherein the processor executes the computer program to perform the information sending method according to any one of claims 1 to 12 or the information sending method according to any one of claims 13 to 28.

30. A computer-readable storage medium storing a computer program which, when executed by a processor, causes the processor to perform the information sending method according to any one of claims 1 to 12 or the information sending method according to any one of claims 13 to 28.

Generate a parameter of a neural network $\sim$110

Send first information, where the first information includes the parameter of the neural network $\sim$120

**FIG. 1**

Generate second information, where the second information is used for a first communication node to perform neural network computing $\sim$210

Send the second information $\sim$220

**FIG. 2**

$x_1$ $\xrightarrow{w_{11}^{(2)}}$ $z_1^{(2)} \big| a_1^{(2)}$

$w_{21}^{(2)}$

$w_{31}^{(2)}$

$w_{12}^{(2)}$

$x_2$ $\xleftarrow{w_{22}^{(2)}}$ $z_2^{(2)} \big| a_2^{(2)}$

$w_{32}^{(2)}$

$w_{13}^{(2)}$

$w_{23}^{(2)}$

$x_3$ $\xrightarrow{w_{33}^{(2)}}$ $z_3^{(2)} \big| a_3^{(2)}$

$w_{11}^{(3)}$

$w_{21}^{(3)}$

$w_{12}^{(3)}$

$w_{22}^{(3)}$

$w_{13}^{(3)}$

$w_{23}^{(3)}$

$z_1^{(3)} \big| a_1^{(3)}$

$z_2^{(3)} \big| a_2^{(3)}$

Layer 1
Input layer

Layer 2
Hidden layer

Layer 3
Output layer

**FIG. 3**

First communication node         Second communication node

| Train a neural network | Apply the neural network |
|---|---|

| Send first information (a parameter of the neural network) | →Send→ | Receive the first information (a parameter of the neural network) |

**FIG. 4**

First communication node         Second communication node

| Train a neural network | Apply the neural network, where actual output data of the neural network is geographic location-related information |
|---|---|

| Send first information (a parameter of the neural network) | →Send→ | Receive the first information (a parameter of the neural network) |

**FIG. 5**

First communication node         Second communication node

| Train a neural network | Perform applying on the neural network, where actual output data of the neural network is beam-related information |
|---|---|

| Send first information (a parameter of the neural network) | →Send→ | Receive the first information (a parameter of the neural network) |

**FIG. 6**

First communication node

| Train the neural network, and optionally, test the neural network |
| --- |

Second communication node

| Determine second information (including a parameter of a neural network) |
| --- |

| Determine a parameter of a neural network (excluding weights and biases) based on the second information |
| --- |

| Send the second information | Send | Receive the second information |
| --- | --- | --- |

**FIG. 7**

Second communication node

| Apply the neural network |
| --- |

First communication node

| Determine first information (including weights and biases of a neural network) |
| --- |

| Determine a parameter of the neural network (excluding the weights and the biases) based on the first information |
| --- |

| Send the first information | Send | Receive the first information |
| --- | --- | --- |

**FIG. 8**

**Second communication node**

| Apply the neural network |
| --- |

**First communication node**

| Determine first information (including a type of a neural network) |
| --- |

| Determine a parameter of the neural network (excluding weights and biases) based on the first information |
| --- |

| Send the first information | Send → | Receive the first information |
| --- | --- | --- |

**FIG. 9**

**Second communication node**

| Apply the neural network |
| --- |

**First communication node**

| Determine first information (including the number of layers of a neural network and/or the number of neurons in each of one or more layers of the neural network) |
| --- |

| Train and/or test the neural network |
| --- |

| Determine a parameter of the neural network (excluding weights and biases) based on the first information |
| --- |

| Send the first information | Send → | Receive the first information |
| --- | --- | --- |

**FIG. 10**

Second communication node

Apply the neural network

First communication node

Train and/or test the neural network

Determine first information
(including a type of input data of a
neural network and/or a type of
output data of the neural network)

Determine a parameter of the neural
network (excluding weights and
biases) based on the first information

Send the first information

Send

Receive the first information

**FIG. 11**

Second communication node

Apply the neural network

First communication node

Train and/or test the neural network

Determine first information
(including a use of a neural
network)

Determine a parameter of the neural
network (excluding weights and
biases) based on the first information

Send the first information

Send

Receive the first information

**FIG. 12**

First communication node

Train the neural network, and optionally, test the neural network

Second communication node

Determine second information (including a type of input/output data of a neural network)

Determine a parameter of the neural network (excluding weights and biases) based on the second information

Send the second information

Send

Receive the second information

**FIG. 13**

First communication node

Train the neural network, and optionally, test the neural network

Second communication node

Determine second information (including a type of a neural network)

Determine a parameter of the neural network (excluding weights and biases) based on the second information

Send the second information

Send

Receive the second information

**FIG. 14**

First communication node

| Train the neural network, and optionally, test the neural network |

Second communication node

| Determine second information (including a use of a neural network which is beam acquisition) |

| Determine a parameter of the neural network (excluding weights and biases) based on the second information |

| Send the second information | →Send→ | Receive the second information |

**FIG. 15**

First communication node

| Train the neural network, and optionally, test the neural network |

Second communication node

| Determine second information (including a use of a neural network which is positioning) |

| Determine a parameter of the neural network (excluding weights and biases) based on the second information |

| Send the second information | →Send→ | Receive the second information |

**FIG. 16**

Antenna element with a
polarization angle of 45°

Antenna element with a
polarization angle of 45°

**FIG. 17**

$W_1$
$w_1$
$m=1$
$w_2$
TXRU
$w_3$
$w_4$

$m=2$
TXRU

$W_2$

Antenna element whose
polarization direction is 45°

**FIG. 18**

Antenna element whose
polarization direction is 45°

**FIG. 19**

**FIG. 20**

EP 4 447 522 A1

**FIG. 21**

**FIG. 22**

**FIG. 23**

36

## INTERNATIONAL SEARCH REPORT

| International application No. |
|---|
| **PCT/CN2022/136436** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W, HO4L, G06N, G06F

Documentation searched other than minimum documentation to the extent that such documents are included in the fields searched

Electronic data base consulted during the international search (name of data base and, where practicable, search terms used)

DWPI, CNABS, WPABS, CNTXT, ENTXT, CJFD, CNKI: 神经网络, 参数, 训练, 测试, 节点, 样本, 权值, 层, 神经元, 同步, 收发, 虚拟化, 天线, 角度, 阵元, 模型, 极化, 面板, neural network, reference, train, test, node, sample, weight, layer, neuron, synchronization, transceiving, virtualization, antenna, angle, array, model, polarization, panel

**C. DOCUMENTS CONSIDERED TO BE RELEVANT**

| Category* | Citation of document, with indication, where appropriate, of the relevant passages | Relevant to claim No. |
|---|---|---|
| X | CN 113486580 A (HEBEI UNIVERSITY OF TECHNOLOGY) 08 October 2021 (2021-10-08) description, paragraphs 43-115 | 1-30 |
| X | CN 111901258 A (ZTE CORP.) 06 November 2020 (2020-11-06) description, paragraphs 26-237 | 1-30 |
| A | CN 110247788 A (NOKIA SOLUTIONS AND NETWORKS OY; NOKIA SHANGHAI BELL CO., LTD.) 17 September 2019 (2019-09-17) entire document | 1-30 |
| A | CN 112039807 A (ZTE CORP.; TSINGHUA UNIVERSITY) 04 December 2020 (2020-12-04) entire document | 1-30 |
| A | US 2020042367 A1 (IBM) 06 February 2020 (2020-02-06) entire document | 1-30 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 February 2023** | **15 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/136436**

| Patent document cited in search report | | | Publication date (day/month/year) | Patent family member(s) | | | Publication date (day/month/year) |
|---|---|---|---|---|---|---|---|
| CN | 113486580 | A | 08 October 2021 | None | | | |
| CN | 111901258 | A | 06 November 2020 | WO | 2021223504 | A1 | 11 November 2021 |
| CN | 110247788 | A | 17 September 2019 | None | | | |
| CN | 112039807 | A | 04 December 2020 | WO | 2022042182 | A1 | 03 March 2022 |
| US | 2020042367 | A1 | 06 February 2020 | US | 10747596 | B2 | 18 August 2020 |

Form PCT/ISA/210 (patent family annex) (July 2022)